# EUROPEAN PATENT SPECIFICATION

(11) **EP 4 223 019 B1**
(45) Date of publication and mention of the grant of the patent: **08.07.2026**
(21) Application number: 21786360.4
(22) Date of filing: 28.09.2021
(51) Int. Cl.: H04W 52/02

(54) **SIGNALING AND INFORMATION EXCHANGE FOR DRX ON SIDELINK COMMUNICATION**
SIGNALISIERUNG UND INFORMATIONSAUSTAUSCH FÜR DRX-ON-SIDELINK-KOMMUNIKATION
SIGNALISATION ET ÉCHANGE D'INFORMATIONS POUR DRX SUR UNE COMMUNICATION DE LIAISON LATÉRALE

(30) Priority: 30.09.2020 EP 20199438
(43) Date of publication of application: 09.08.2023
(73) Proprietor: Fraunhofer-Gesellschaft zur Förderung der angewandten Forschung e.V., 80686 München (DE)
(72) Inventor: MOHAMMAD SOLEYMANI, Dariush, 91058 Erlangen (DE); LEYH, Martin, 91058 Erlangen (DE); ROTH-MANDUTZ, Elke, 91058 Erlangen (DE); BHADAURIA, Shubhangi, 91058 Erlangen (DE); HAROUNABADI, Mehdi, 91058 Erlangen (DE); LIPKA, Dietmar, 91058 Erlangen (DE); KARANUKARAN, Prasanth, 91058 Erlangen (DE); POPP, Julian, 91058 Erlangen (DE); NIEMANN, Bernhard, 91058 Erlangen (DE)
(74) Representative: Schlenker, Julian
(86) International application number: PCT/EP2021/076657
(87) International publication number: WO 2022/069475

(56) References cited:
- EP-A1- 3 500 028
- WO-A1-2017/196611
- WO-A1-2018/064477
- LG ELECTRONICS: "Summary of email discussion on Rel-17 sidelink enhancement", vol. TSG RAN, no. Sitges, ES; 20191209 - 20191212, 2 December 2019 (2019-12-02), XP051834348, Retrieved from the Internet <URL:https://ftp.3gpp.org/tsg_ran/TSG_RAN/TSGR_86/Docs/RP-192745.zip RP-192745 email discussion on sidelink enhancement.doc> [retrieved on 20191202]
- "3rd Generation Partnership Project; Technical Specification Group Services and System Aspects; Study on architecture enhancements for 3GPP support of advanced Vehicle-to-Everything (V2X) services; Phase 2 (Release 17)", no. V0.2.0, 3 September 2020 (2020-09-03), pages 1 - 24, XP051925942, Retrieved from the Internet <URL:ftp://ftp.3gpp.org/Specs/archive/23_series/23.776/23776-020.zip 23776-020-rm.docx> [retrieved on 20200903]
- HUAWEI ET AL: "KI #1, New Solution: V2X Layer assisted DRX over PC5", vol. SA WG2, no. E (e-meeting); 20200819 - 20200902, 2 September 2020 (2020-09-02), XP051928716, Retrieved from the Internet <URL:https://ftp.3gpp.org/tsg_sa/WG2_Arch/TSGS2_140e_Electronic/Docs/S2-2006050.zip S2-2006050.doc> [retrieved on 20200902]
- SAMSUNG: "On Sidelink Issues and RAN1 Impacts", vol. RAN WG1, no. e-Meeting; 20200817 - 20200828, 7 August 2020 (2020-08-07), XP051915226, Retrieved from the Internet <URL:https://ftp.3gpp.org/tsg_ran/WG1_RL1/TSGR1_102-e/Docs/R1-2006172.zip R1-2006172.docx> [retrieved on 20200807]
- INTEL CORPORATION: "Sidelink enhancements for UE power saving", vol. RAN WG1, no. e-Meeting; 20200817 - 20200828, 8 August 2020 (2020-08-08), XP051917798, Retrieved from the Internet <URL:https://ftp.3gpp.org/tsg_ran/WG1_RL1/TSGR1_102-e/Docs/R1-2005896.zip R1-2005896 Intel - eV2X Power Saving.docx> [retrieved on 20200808]
- "LTE; 5G; Overall description of Radio Access Network (RAN) aspects for Vehicle-to-everything (V2X) based on LTE and NR (3GPP TR 37.985 version 16.0.0 Release 16)", vol. 3GPP RAN, no. V16.0.0, 29 July 2020 (2020-07-29), pages 1 - 37, XP014379053, Retrieved from the Internet <URL:http://www.etsi.org/deliver/etsi_tr/137900_137999/137985/16.00.00_60/tr_137985v160000p.pdf> [retrieved on 20200729]

## Description

The present invention relates to the field of wireless communication networks, and more specifically, to concepts for transmitting data in wireless communication networks. Some embodiments of the present invention relate to signaling and information exchange for DRX on sidelink communication.

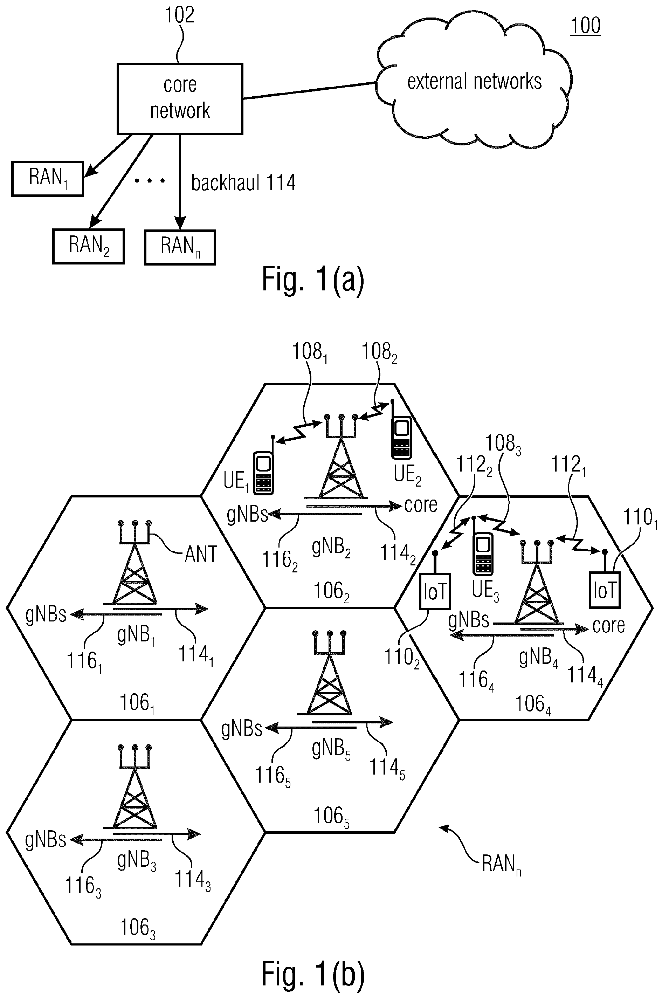

Fig. 1 is a schematic representation of an example of a terrestrial wireless network 100 including, as is shown in Fig. 1(a), a core network 102 and one or more radio access networks RAN1, RAN2, ... RANN. Fig. 1(b) is a schematic representation of an example of a radio access network RANn that may include one or more base stations gNB1 to gNB5, each serving a specific area surrounding the base station schematically represented by respective cells 1061 to 1065. The base stations are provided to serve users within a cell. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary loT devices which connect to a base station or to a user. The mobile devices or the loT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the RANn may include more or less such cells, and RANn may also include only one base station. Fig. 1(b) shows two users UE1 and UE2, also referred to as user equipment, UE, that are in cell 1062 and that are served by base station gNB2. Another user UE3 is shown in cell 1064 which is served by base station gNB4. The arrows 1081, 1082 and 1083 schematically represent uplink/downlink connections for transmitting data from a user UE1, UE2 and UE3 to the base stations gNB2, gNB4 or for transmitting data from the base stations gNB2, gNB4 to the users UE1, UE2, UE3. Further, Fig. 1(b) shows two loT devices 1101 and 1102 in cell 1064, which may be stationary or mobile devices. The loT device 1101 accesses the wireless communication system via the base station gNB4 to receive and transmit data as schematically represented by arrow 1121. The loT device 1102 accesses the wireless communication system via the user UE3 as is schematically represented by arrow 1122. The respective base station gNB1 to gNB5 may be connected to the core network 102, e.g., via the S1 interface, via respective backhaul links 1141 to 1145, which are schematically represented in Fig. 1(b) by the arrows pointing to "core". The core network 102 may be connected to one or more external networks. Further, some or all of the respective base station gNB1 to gNB5 may connected, e.g., via the S1 or X2 interface or the XN interface in NR, with each other via respective backhaul links 1161 to 1165, which are schematically represented in Fig. 1(b) by the arrows pointing to "gNBs".

For data transmission a physical resource grid may be used. The physical resource grid may comprise a set of resource elements to which various physical channels and physical signals are mapped. For example, the physical channels may include the physical downlink, uplink and sidelink shared channels (PDSCH, PUSCH, PSSCH) carrying user specific data, also referred to as downlink, uplink and sidelink payload data, the physical broadcast channel (PBCH) carrying for example a master information block (MIB), the physical downlink shared channel (PDSCH) carrying for example a system information block (SIB), the physical downlink, uplink and sidelink control channels (PDCCH, PUCCH, PSSCH) carrying for example the downlink control information (DCI), the uplink control information (UCI) and the sidelink control information (SCI). For the uplink, the physical channels, or more precisely the transport channels according to 3GPP, may further include the physical random access channel (PRACH or RACH) used by UEs for accessing the network once a UE is synchronized and has obtained the MIB and SIB. The physical signals may comprise reference signals or symbols (RS), synchronization signals and the like. The resource grid may comprise a frame or radio frame having a certain duration in the time domain and having a given bandwidth in the frequency domain. The frame may have a certain number of subframes of a predefined length, e.g., 1ms. Each subframe may include one or more slots of 12 or 14 OFDM symbols depending on the cyclic prefix (CP) length. All OFDM symbols may be used for DL or UL or only a subset, e.g., when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g., DFT-s-OFDM. Other waveforms, like non-orthogonal waveforms for multiple access, e.g., filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the NR (5G), New Radio, standard.

The wireless network or communication system depicted in Fig. 1 may by a heterogeneous network having distinct overlaid networks, e.g., a network of macro cells with each macro cell including a macro base station, like base station gNB1 to gNB5, and a network of small cell base stations (not shown in Fig. 1), like femto or pico base stations.

In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-Advanced Pro standard or the NR (5G), new radio, standard.

In mobile communication networks, for example in a network like that described above with reference to Fig. 1, like an LTE or 5G/NR network, there may be UEs that communicate directly with each other over one or more sidelink (SL) channels, e.g., using the PC5 interface. UEs that communicate directly with each other over the sidelink may include vehicles communicating directly with other vehicles (V2V communication), vehicles communicating with other entities of the wireless communication network (V2X communication), for example roadside entities, like traffic lights, traffic signs, or pedestrians. Other UEs may not be vehicular related UEs and may comprise any of the above-mentioned devices. Such devices may also communicate directly with each other (D2D communication) using the SL channels.

When considering two UEs directly communicating with each other over the sidelink, both UEs may be served by the same base station so that the base station may provide sidelink resource allocation configuration or assistance for the UEs. For example, both UEs may be within the coverage area of a base station, like one of the base stations depicted in Fig. 1. This is referred to as an "in-coverage" scenario. Another scenario is referred to as an "out-of-coverage" scenario. It is noted that "out-of-coverage" does not mean that the two UEs are not within one of the cells depicted in Fig. 1, rather, it means that these UEs
- may not be connected to a base station, for example, they are not in an RRC connected state, so that the UEs do not receive from the base station any sidelink resource allocation configuration or assistance, and/or
- may be connected to the base station, but, for one or more reasons, the base station may not provide sidelink resource allocation configuration or assistance for the UEs, and/or
- may be connected to the base station that may not support NR V2X services, e.g., GSM, UMTS, LTE base stations.

When considering two UEs directly communicating with each other over the sidelink, e.g., using the PC5 interface, one of the UEs may also be connected with a BS, and may relay information from the BS to the other UE via the sidelink interface. The relaying may be performed in the same frequency band (in-band-relay) or another frequency band (out-of-band relay) may be used. In the first case, communication on the Uu and on the sidelink may be decoupled using different time slots as in time division duplex, TDD, systems.

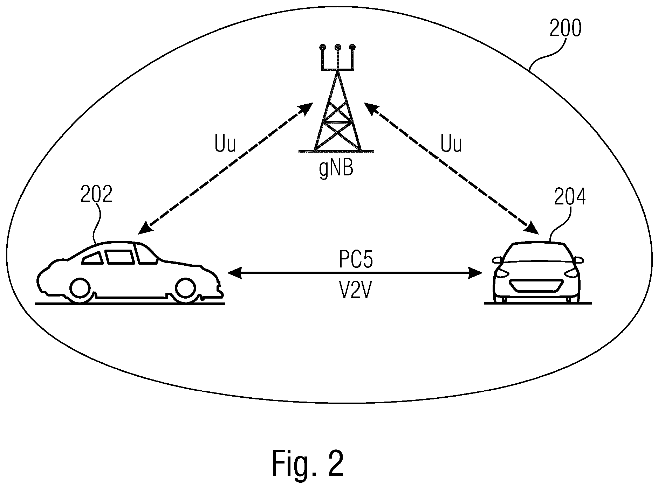

Fig. 2 is a schematic representation of an in-coverage scenario in which two UEs directly communicating with each other are both connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204 both in the coverage area 200 of the base station gNB. Both vehicles 202, 204 are connected to the base station gNB and, in addition, they are connected directly with each other over the PC5 interface. The scheduling and/or interference management of the V2V traffic is assisted by the gNB via control signaling over the Uu interface, which is the radio interface between the base station and the UEs. In other words, the gNB provides SL resource allocation configuration or assistance for the UEs, and the gNB assigns the resources to be used for the V2V communication over the sidelink. This configuration is also referred to as a mode 1 configuration in NR V2X or as a mode 3 configuration in LTE V2X.

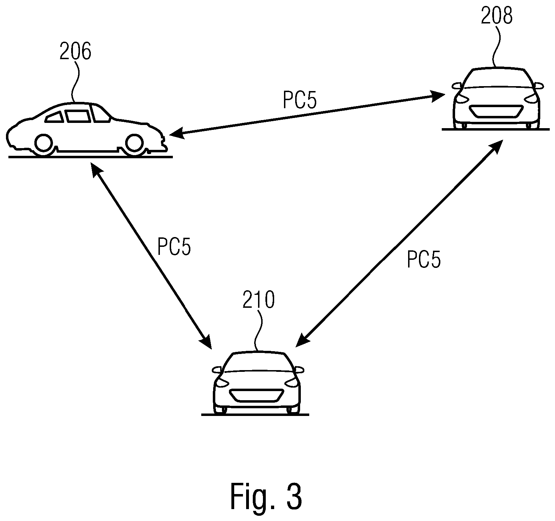

Fig. 3 is a schematic representation of an out-of-coverage scenario in which the UEs directly communicating with each other are either not connected to a base station, although they may be physically within a cell of a wireless communication network, or some or all of the UEs directly communicating with each other are to a base station but the base station does not provide for the SL resource allocation configuration or assistance. Three vehicles 206, 208 and 210 are shown directly communicating with each other over a sidelink, e.g., using the PC5 interface. The scheduling and/or interference management of the V2V traffic is based on algorithms implemented between the vehicles. This configuration is also referred to as a mode 2 configuration in NR V2X or as a mode 4 configuration in LTE V2X. As mentioned above, the scenario in Fig. 3 which is the out-of-coverage scenario does not necessarily mean that the respective mode 2 UEs (in NR) or mode 4 UEs (in LTE) are outside of the coverage 200 of a base station, rather, it means that the respective mode 2 UEs (in NR) or mode 4 UEs (in LTE) are not served by a base station, are not connected to the base station of the coverage area, or are connected to the base station but receive no SL resource allocation configuration or assistance from the base station. Thus, there may be situations in which, within the coverage area 200 shown in Fig. 2, in addition to the NR mode 1 or LTE mode 3 UEs 202, 204 also NR mode 2 or LTE mode 4 UEs 206, 208, 210 are present.

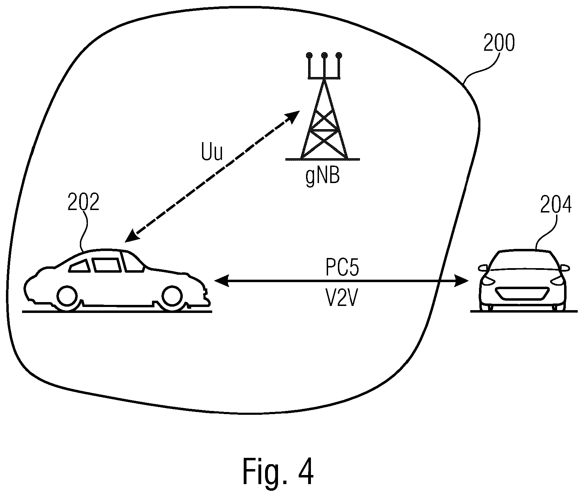

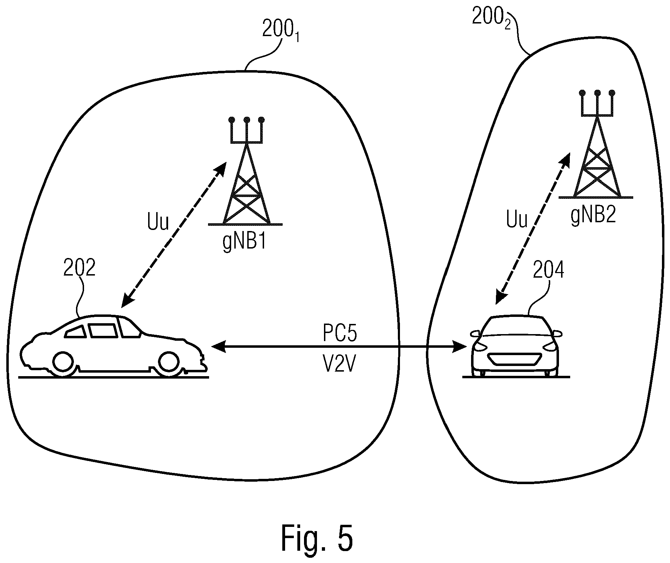

Naturally, it is also possible that the first vehicle 202 is covered by the gNB, i.e. connected with Uu to the gNB, wherein the second vehicle 204 is not covered by the gNB and only connected via the PC5 interface to the first vehicle 202, or that the second vehicle is connected via the PC5 interface to the first vehicle 202 but via Uu to another gNB, as will become clear from the discussion of Figs. 4 and 5.

Fig. 4 is a schematic representation of a scenario in which two UEs directly communicating with each, wherein only one of the two UEs is connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204, wherein only the first vehicle 202 is in the coverage area 200 of the base station gNB. Both vehicles 202, 204 are connected directly with each other over the PC5 interface.

Fig. 5 is a schematic representation of a scenario in which two UEs directly communicating with each, wherein the two UEs are connected to different base stations. The first base station gNB1 has a coverage area that is schematically represented by the first circle 2001, wherein the second station gNB2 has a coverage area that is schematically represented by the second circle 2002. The UEs directly communicating with each other include a first vehicle 202 and a second vehicle 204, wherein the first vehicle 202 is in the coverage area 2001 of the first base station gNB1 and connected to the first base station gNB1 via the Uu interface, wherein the second vehicle 204 is in the coverage area 2002 of the second base station gNB2 and connected to the second base station gNB2 via the Uu interface.

Rel-16 NR sidelink is designed for UEs (e.g., V-UEs), assuming that power consumption is no issue. Therefore, a UE supporting sidelink is "always-on".
[9] describes an electronic device used for a network control terminal, wherein the electronic device comprises: a processing circuit, configured to configure, for a relay link between the network node and one or more other network nodes, a SL-DRX for the network node and/or the one or more other network nodes and perform relay transmission between the network node and the one or more other network nodes on the basis of the configuration of the SL-DRX.
[10] describes a solution for Vehicle-to-everything (V2X) Layer assisted discontinuous reception (DRX) over PC5.
[11] describes sidelink issues and RAN1 Impacts.
[12] describes sidelink enhancements for user equipment (UE) power saving.
[13] relates to LTE and 5G overall description of Radio Access Network (RAN) aspects for Vehicle-to-everything (V2X) based on LTE and NR.

Thus, starting from the above, there may be a need for improvements or enhancements with respect to power savings for UEs, especially for the vulnerable road users UEs (VRUs) in V2X use cases and for UEs in public safety and commercial use cases.

Embodiments of the present invention are described herein making reference to the appended drawings.

The invention is defined by the appended claims.
- Fig. 1: shows a schematic representation of an example of a wireless communication system;
- Fig. 2: shows a schematic representation of an in-coverage scenario in which two UEs directly communicating with each other are both connected to a base station,
- Fig. 3: shows a schematic representation of an out-of-coverage scenario in which the UEs directly communicating with each other are either not connected to a base station, although they may be physically within a cell of a wireless communication network, or some or all of the UEs directly communicating with each other are to a base station but the base station does not provide for the SL resource allocation configuration or assistance,
- Fig. 4: shows a schematic representation of a scenario in which two UEs are directly communicating with each, wherein only one of the two UEs is connected to a base station,
- Fig. 5: is a schematic representation of a scenario in which two UEs are directly communicating with each, wherein the two UEs are connected to different base stations,
- Fig. 6: shows in a diagram an example of a DRX cycle,
- Fig. 7: shows a schematic representation of a C-DRX configuration and in a diagram a corresponding DRX cycle,
- Fig. 8: shows a schematic representation of the Rel. 16 wake-up signal (DCI format 2_6),
- Fig. 9: illustrates an exemplary mechanism in which the UE goes to sleep mode after receiving data (at the expiry of Inactivity timer (IAT)),
- Fig. 10: shows an illustration of DRX operation using WUS and using Rel-15 DRX MAC command CE-based GTS [7],
- Fig. 11: a schematic representation of a wireless communication system including a central transceiver, like a base station, and one or more transceivers, like user devices, UEs,
- Fig. 12: shows a schematic illustration of an DRX on/off signaling by including an indication (e.g., importance/priority indication) in the first stage SCI,
- Fig. 13: shows a schematic illustration of an DRX on/off signaling by modifying an AGC transmission and multiplexing a power saving (PS) signal to indicate the importance/priority (e.g., frequency division or code division multiplexing with AGC),
- Fig. 14: shows a schematic illustration of an DRX on/off signaling by modifying (shorting or puncturing) an AGC transmission and adding a power saving (PS) signal at the end of the AGC transmission to indicate the importance/priority (e.g., time division multiplexing with AGC),
- Fig. 15: shows a schematic view of an in-coverage scenario with two UEs that are camping in the same cell that is served by a base station,
- Fig. 16: shows a schematic view of a scenario in which two UEs are located in an intersection area of two cells that are served by two different base stations,
- Fig. 17: shows a schematic representation of two UEs with different WUS configurations and operating in different coverage scenarios,
- Fig. 18: shows a schematic representation of an example of a resource selection procedure, when a transmitter UE considers the DRX-On duration of intended receivers over the course of radio resource selection procedure, and
- Fig. 19: illustrates an example of a computer system on which units or modules as well as the steps of the methods described in accordance with the inventive approach may execute.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to one skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

As indicated above, Rel-16 NR (NR = new radio) sidelink is designed for UEs (e.g., V-UEs), assuming that power consumption is no issue. Therefore, a UE supporting sidelink can be "always-on" without considering the need for DRX (DRX = discontinuous reception) to save battery. Solutions for power saving in Rel-17 are required for UEs, especially for the vulnerable road users UEs (VRUs) in V2X use cases and for UEs in public safety and commercial use cases through which power consumption in the UEs needs to be minimized to save battery. This can be realized, for example, through DRX specifically for V2X application.

Note that 'UEs' throughout the present patent application means UE of any category supporting sidelink features [5] i.e. P-UEs and/or V-UEs. This includes the all the possible application areas like commercial, public safety and vehicular communication. In embodiments, the UEs are battery based, i.e. have limited power source.

Before embodiments of the present invention are described, an overview of DRX on the NR Uu interface and LTE sidelink is given. For V2X or public safety applications on the sidelink until rel-16, any UE category is considered to be "always-on". DRX to save power is not foreseen for any UE category or type, neither for vehicular-based UEs (V-UEs) nor battery-based UEs, e.g., UEs of VRUs. Since V-UEs are connected to the vehicular power supply, power consumption could therefore be less relevant for V-UEs. Unlike pedestrians or cyclists using battery-based wearable UEs, saving the power is crucial, which ensures operability of, e.g., sidelink based V2X applications over time.

### DRX on the Uu Interface - New Radio (NR) Release-15/16

For different modes of a UE the following procedures are considered for power saving using DRX.

### UEs in RRC Connected Mode

In RRC connected mode, a UE does monitor PDCCH less often, when DRX is configured, to save energy. The parameters explained below play a pivotal role in DRX configuration:
- On-duration: the duration that the UE waits, after waking up, for receiving PDCCHs. If the UE successfully decodes a PDCCH, the UE stays awake and starts the inactivity timer;
- Inactivity-timer: Inactivity-timer: duration that the UE waits to successfully decode a PDCCH, from the last successful decoding of a PDCCH, failing which it can go back to sleep. The UE shall restart the inactivity timer following a single successful decoding of a PDCCH for a first transmission only (i.e. not for retransmissions);
- Retransmission timer: the duration that a UE keeps waited to receive a retransmission message;
- DRX Cycle: is an aggregation of on-duration and inactivity duration that is repeated cyclically (see Figure 1); The DRX cycle length can be adjusted for delay budget (if preferred by the UE; signaled in *UEAssistenceInformation*
- Active-time: the total duration that the UE monitors PDCCH. This includes the "on-duration" of the DRX cycle and when the UE monitors the receiving messages while waiting for a transmission opportunity.

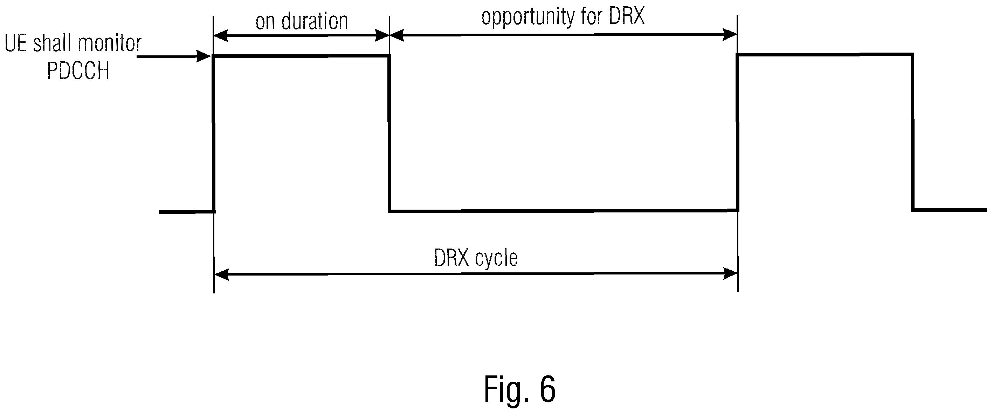

Fig. 6 shows in a diagram an example of a DRX cycle. Thereby, the ordinate denotes the current/power consumption (e.g., active and sleep periods) and the abscissa denotes the time.

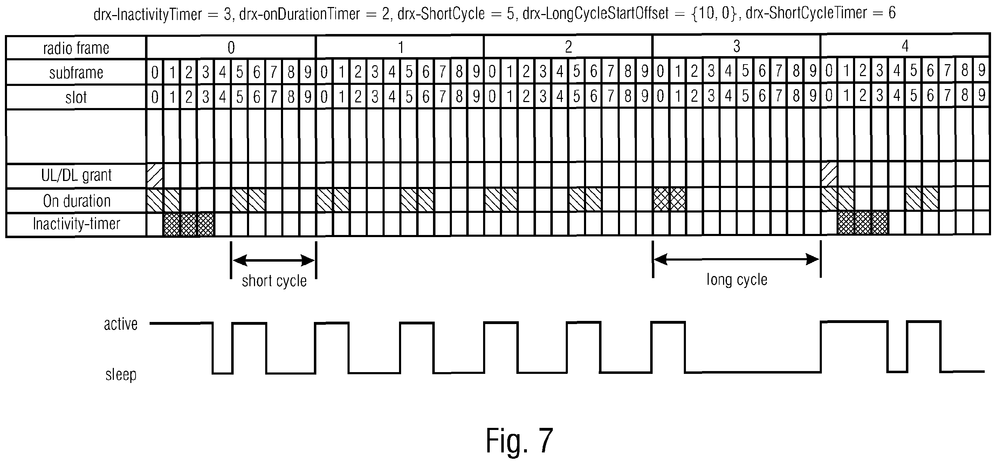

A more detailed example of the C-DRX (connected mode DRX) in Rel 15 is described in [6] and is represented in Fig. 7, which shows a schematic representation of C-DRX configuration and in a diagram a corresponding DRX cycle, where the ordinate denotes the current/power consumption (e.g., active and sleep periods) and the abscissa denotes the time.

In detail, Fig. 7 depicts a DRX parameter set for a specific scenario where {*drx-InactivityTimer* = 3 ms, *drx-onDurationTimer =* 2 ms, *drx-ShortCycle =* 5 ms, *drx-LongCycleStartoffset =* [10 ms, 0 ms], *drx-ShortCycleTimer =* 6}. In the slot location of {0, 0}, a UL/DL scheduling is granted. Then, a *drx-InactivityTimer* is triggered and lasts for 3 slots (*drx-InactivityTimer =* 3 ms). UE keeps monitoring the PDCCH until the *InactivityTimer* expires. Afterward, the UE goes into sleep mode. A *drx-onDurationTimer* is adopted for each DRX cycle. In general, DRX cycle can be configured with short or large cycles. For example, the DRX operation starts from slots of {0, 0} with cycle of 5 slots (*drx-ShortCycle =* 5 ms) (c.f. Figure 2). A UE shall monitor the PDCCH during *drx-onDurationTimer.* A long DRX cycle is then configured to be triggered after 6 short DRX cycles (*drx-ShortCycleTimer =* 6). Finally, the *"Inactivity Timer"* shall be restarted when there is a new data transmission or UL/DL scheduling.

### UEs in RRC Inactive or RRC Idle Modes

During the Rel. 16 power saving study, it has been proposed to include a DCI based (i.e. layer 1 based) go-to-sleep signaling to complement the Rel. 15 MAC command control element-based mechanism [7].

The Access and Mobility Management Function (AMF) provides to the Next Generation Radio Access Network (NG-RAN) node the core network assistance information to assist the NG-RAN node's decision whether the UE can be sent to RRC_INACTIVE. The core network assistance information includes the registration area configured for the UE, the "Periodic Registration Update" timer, and the UE "Identity Index" value, and may include the UE specific DRX, an indication if the UE is configured with Mobile Initiated Connection Only (MICO) mode by the AMF, and the expected UE behavior. The UE registration area is taken into account by the NG-RAN node when configuring the RAN-based Notification Area (RNA). The UE specific DRX and UE Identity Index value are used by the NG-RAN node for RAN paging. When the gNB decides to reconfigure the UE (e.g., with a new DRX cycle or RNA) or when the gNB decides to push the UE to RRC_IDLE, the Signaling Radio Bearer (SRB) is used to ensure at least integrity protection.

Paging DRX is defined where the UE in RRC_IDLE or RRC_INACTIVE is only required to monitor paging channels during one Paging Occasion (PO) per DRX cycle (see TS 38.304).

### Wake-Up (WUS) Signal - New Radio (NR) and LTE Release-15/16

Bandwidth adaptation is seen as another power-saving feature in Rel. 15, wherein a UE has to monitor PDCCH on the one active BWP out of up to four configured BWPs. A BWP inactivity timer (independent from the DRX inactivity-timer described above) is used to switch the active BWP to the default one: the timer is restarted upon a successful PDCCH decoding. It returns to the default BWP when the timer is expired.

Rel. 16 introduces a wake-up Signal (WUS) in conjunction with eDRX or additional power saving for NB-loT and eMTC devices.

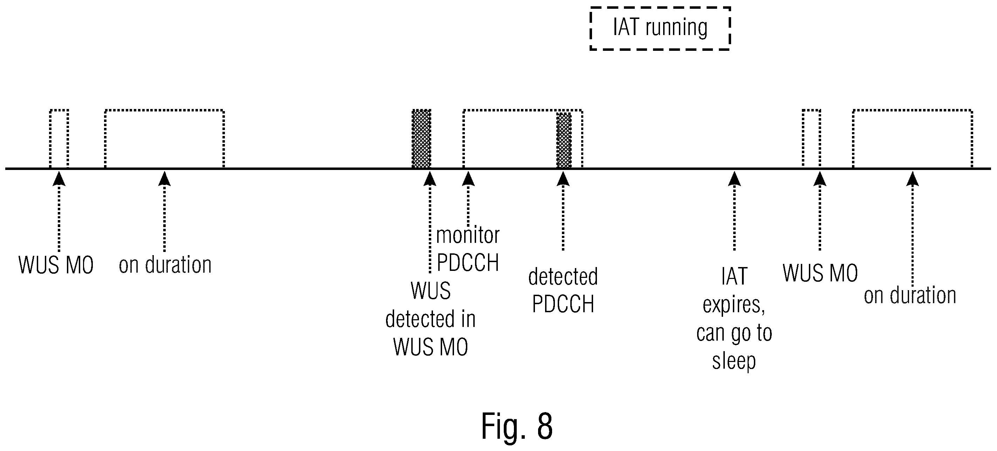

Fig. 8 shows a schematic representation of the Rel. 16 wake-up signal (DCI format 2_6).

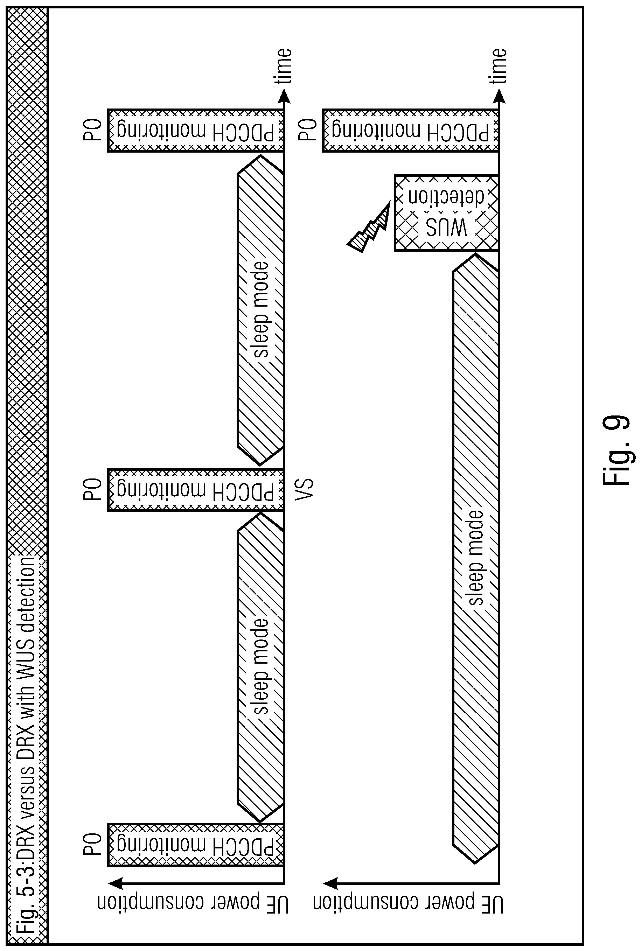

The basic principle of the WUS is explained in [7]: If a UE detects a WUS signal in a WUS monitoring occasion (MO), it starts monitoring PDCCH during the on-duration, otherwise skips the monitoring, e.g., goes to the sleep mode to save the energy. Fig. 9 illustrates an exemplary mechanism in which the UE goes to sleep mode after receiving data (at the expiry of Inactivity timer (IAT)).

In Rel-15 the WUS is a common WUS that wakes up all the UEs listening for that specific WUS MO. Rel-16 introduces gWUS, that enables grouping of UEs and reducing the number of UEs that wake up if gWUS is sent. The number of UE groups per WUS resource is 1, 2, 4, or 8. The grouping is based at least on the UE ID.

Important parameters relevant to WUS among other things include a wake-up indication bit [8, section 10.3] and a ps-offset:
- the UE may not start the *drx-onDurationTimer* for the next long DRX cycle when a value of the Wake-up indication bit is '0', and
- the UE starts the *drx-onDurationTimer* for the next long DRX cycle when a value of the Wake-up indication bit is '1',
- an offset by *ps-Offset* indicating a time, where the UE starts monitoring PDCCH for detection of DCI format 2_6 according to the number of search space sets, prior to a slot where the *drx-onDurationTimer* would start on the PCell (primary cell) or on the SCell (secondary cell).

The UE does not monitor PDCCH for detecting DCI format 2_6 (i.e., WUS) during Active Time [3].

### Go-To-Sleep (GTS) Signal- New Radio (NR) and LTE Release-15/16

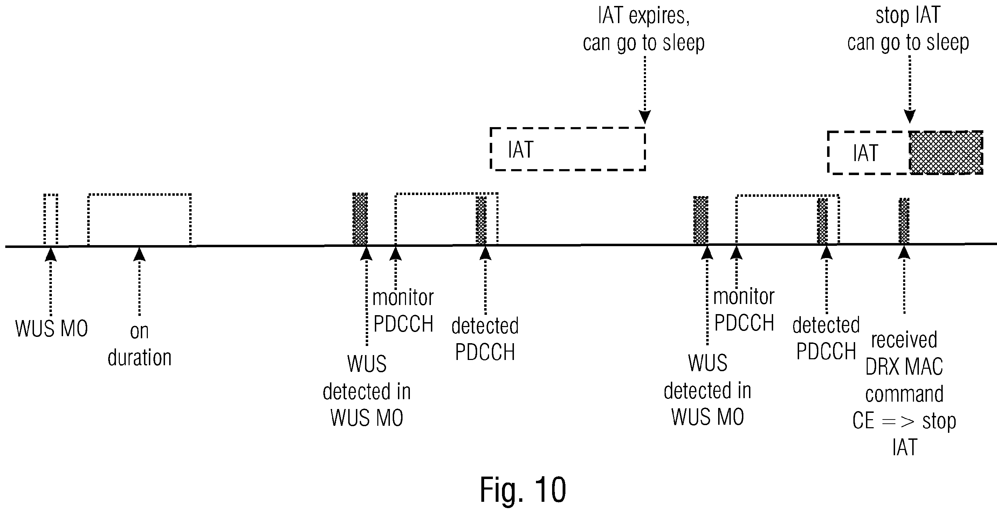

Another feature in Rel. 15, an enhancement which was also discussed in the Rel. 16 power saving study item, is the Go-To-Sleep (GTS) signaling. According to [7], go-to-sleep is a mechanism by which a gNB can send UE to sleep, for example, in C-DRX, UE can go to sleep when Inactivity timer expires. While there are several variants of GTS, it is noted that MAC based go-to-sleep is already supported in Rel-15. In a MAC command-based mechanism, when UE is monitoring PDCCH, gNB can send it to DRX via explicit DRX MAC command CE by stopping the Inactivity and any on duration timers (see [3]). This mechanism as illustrated in [7] is depicted in Fig. 10.

In detail, Fig. 10 shows an illustration of DRX operation using WUS and using Rel-15 DRX MAC command CE-based GTS [7].

As already indicated above, in NR V2X communication Release 16 and before, the DRX feature was not taken into consideration. In case of in-coverage scenario, i.e., either mode 1 or 2 resource allocation, a UE is assumed to be in "always-on" state. Additionally, DRX concept for the UEs in an out-of-coverage scenario is not defined yet.

### Embodiments

Embodiments enable DRX on the sidelink allowing any type of UEs, but also especially battery-based UEs or power constrained UEs to perform sidelink operations in a power-efficient manner in different scenarios. DRX is beneficial, e.g., for advanced V2X use cases, including, e.g., for P-UEs and for (P-)UEs using public safety and commercial applications, where power consumption in the UEs needs to be minimized.

Alternatively, instead of defining / adapting an on-off duration, embodiments introduce a WUS (see loT) in the sidelink interface. One advantage is that it makes the sidelink interface more flexible to wake-up the UEs when it is required to reduce power consumption. Thereby, embodiments provide a low complex WUS that can simply be detected and requires less resources than PDCCH, thereby further reducing the power consumption of the UEs. Alternatively, or in combination with the WUS, embodiments provide a go-to-sleep (GTS) signal, that demands UEs to go to sleep. Similar to WUS and GTS signaling on the PHY, higher layer signaling can demand UEs to go to sleep or stay awake after, e.g., periodic data reception as some kind of pre-empting the DRX configuration.

Another challenge related to WUS emerges when two UEs have different WUS configurations, i.e., one UE is preconfigured with WUS active and another one without.

DRX for UEs reduces (or even minimizes) the power consumption in battery-based UEs, e.g., in V2X applications on the sidelink considering not only extended off-durations, which can be adapted based on different parameters, e.g., QoS, geographical area, NR numerology. In addition, for the UEs to communicate it is necessary to align the on-/off periods of UEs in proximity. This can applied on the UEs communicating via Uu interface as well as sidelink. This will result in different advantages, e.g., reduced power consumption by allowing UE components to go to sleep mode.

It should be mentioned that in embodiments, the DRX support is optional for a UE. Hence, there can be DRX enabled UEs as well as non-DRX enabled UEs.

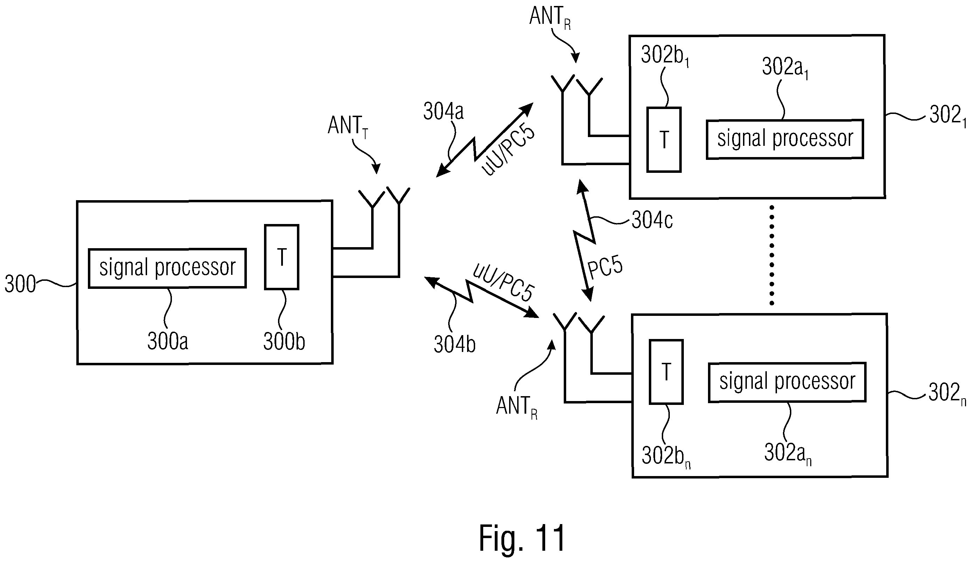

Embodiments of the present invention may be implemented in a wireless communication system as depicted in Figs. 1-5 including base stations and users, like mobile terminals or loT devices. Fig. 11 is a schematic representation of a wireless communication system including a central transceiver, like a base station, and one or more transceivers 3021 to 302n, like user devices, UEs. The central transceiver 300 and the transceivers 302 may communicate via one or more wireless communication links or channels 304a, 304b, 304c, like a radio link. The central transceiver 300 may include one or more antennas ANTT or an antenna array having a plurality of antenna elements, a signal processor 300a and a transceiver unit 300b, coupled with each other. The transceivers 302 include one or more antennas ANTR or an antenna array having a plurality of antennas, a signal processor 302a1, 302an, and a transceiver unit 302b1, 302bn coupled with each other. The base station 300 and the UEs 302 may communicate via respective first wireless communication links 304a and 304b, like a radio link using the Uu interface, while the UEs 302 may communicate with each other via a second wireless communication link 304c, like a radio link using the PC5 interface. When the UEs are not served by the base station, are not be connected to a base station, for example, they are not in an RRC connected state, or, more generally, when no SL resource allocation configuration or assistance is provided by a base station, the UEs may communicate with each other over the sidelink. The system, the one or more UEs and the base stations may operate in accordance with the inventive teachings described herein.

Embodiments provide a transceiver [e.g., first UE] of a wireless communication system, wherein the transceiver is configured to operate in a [e.g., new radio, NR] sidelink in-coverage, out of coverage or partial coverage scenario [e.g., NR sidelink mode [e.g., mode 1 or mode 2]], in which resources for a communication [e.g., transmission and/or reception] over the sidelink are (pre-)configured by the wireless communication system or allocated or scheduled autonomously by the transceiver, wherein the transceiver is configured to receive over the sidelink a reception mode configuration signal from another transceiver [e.g., second UE] of the wireless communication system, wherein the transceiver is configured to change a reception mode responsive to the reception of the reception mode configuration signal.

In embodiments, the transceiver is configured to change the reception mode by switching [e.g., a receiver part of the transceiver], in dependence on the reception mode configuration signal [e.g. signaling a DRX activation; or signaling a DRX deactivation; or wake-up signal; or go-to-sleep signal; or keep awake signal], into one out of the following reception modes
- a discontinuous reception mode [e.g., responsive to a DRX activation signaling],
- a normal reception mode [e.g., responsive to a DRX deactivation signaling, or responsive to a wake-up signal or keep awake signal],
- a low-power reception mode [e.g., responsive to a go-to-sleep signal; e.g., for detecting a wake-up signal],
- a sleep mode [e.g., responsive to a go-to-sleep signal].

In embodiments, the reception mode configuration signal is configured to signal [e.g., comprises an information signaling] an activation of the discontinuous reception mode or a deactivation of the discontinuous reception mode, wherein the transceiver is configured to change the reception mode by switching [e.g., the receiver part], in dependence on the reception mode configuration signal, into one out of the following reception modes
- the discontinuous reception mode [e.g., responsive to a DRX activation signaling],
- the normal reception mode [e.g., responsive to a DRX deactivation signaling].

In embodiments, the activation of the discontinuous reception mode or the deactivation of the discontinuous reception mode is signaled in the physical layer.

In embodiments, the activation of the discontinuous reception mode or the deactivation of the discontinuous reception mode is signaled by means of a priority or importance information, wherein the transceiver is configured to switch the receiver part into the discontinuous reception mode, when the priority or importance information fulfills a discontinuous reception mode criterion [e.g., a priority or importance value is below a threshold], wherein the transceiver is configured to switch the receiver part into the normal reception mode, when the priority or importance information fulfills a normal reception mode criterion [e.g., a priority or importance value is equal to or greater than the threshold].

In embodiments, the activation of the discontinuous reception mode or the deactivation of the discontinuous reception mode is signaled [e.g., by means of an explicit indication] in one out of
- a first stage sidelink control information, SCI,
- a second stage sidelink control information, SCI,
- a combination of the first stage sidelink control information, SCI, and the second stage sidelink control information, SCI.

In embodiments, an information signaling the activation or deactivation of the discontinuous reception mode is multiplexed with a transmission of an automatic gain control information.

For example, the transmission of the automatic gain control information is time division multiplexed, frequency division multiplexed, and/or code division multiplexed with the information signaling of the activation or deactivation of the discontinuous reception mode.

In embodiments, the reception mode configuration signal is a wake-up signal, wherein the transceiver is configured to switch, in response to the wake-up signal, into the normal reception mode.

In embodiments, the transceiver is configured to detect the wake-up signal using only a portion [e.g., a matched filter] of its receiver chain [e.g., while the rest of receiver chain can be deactivated] [e.g., in the low-power reception mode or during an off-duration of the discontinuous reception mode].

In embodiments, the transceiver is configured to detect the wake-up signal using a separate wake-up signal detector [e.g., matched filter].

In embodiments, the wake-up signal comprises a known sequence [e.g., known to the transceiver] [e.g., a Zadoff-Chu sequence or a pseudo-noise sequence].

In embodiments, the transceiver is configured to detect the wake-up signal continuously.

In embodiments, the transceiver is configured to detect the wake-up signal in preconfigured slots or periods [e.g., configured via DCI or a higher layer message [e.g., RRC]].

In embodiments, a wake-up sequence of the wake-up signal
- is mapped in the time and/or frequency domain to symbols reserved for an automatic gain control or a hybrid automatic repeat request, HARQ, feedback,
- or is mapped in the time and/or frequency domain to control or data symbols,
- or is aligned in the time and/or frequency domain aligned with a synchronization signal [e.g., preconfigured or configured by higher layers].

In embodiments, the wake-up signal is a unicast, groupcast or broadcast wake-up signal.

In embodiments, the wake-up signal addresses only the transceiver or a group of transceivers, wherein the transceiver is part of the group of transceivers.

In embodiments, the transceiver is configured to receive from the other transceiver or a dedicated wake-up signal configuration transceiver a wake-up signal configuration message [e.g., transmitted on a periodic or non-periodic basis], wherein the transceiver is configured to adjust at least one parameter of a wake-up signal reception configuration used for receiving the wake-up signal based on the wake-up signal configuration message.

In embodiments, the transceiver is configured to adjust at least one parameter of a wake-up signal reception configuration used for receiving the wake-up signal based on an area the transceiver is located [e.g., validity area or one or multiples zone(s)].

In embodiments, the transceiver is configured to receive from a base station [e.g., gNB] of the wireless communication systems a wake-up signal configuration message [e.g., transmitted on a periodic or non-periodic basis], wherein the transceiver is configured to adjust at least one parameter of a wake-up signal reception configuration used for receiving the wake-up signal based on the wake-up signal configuration message [e.g., enabling the transceiver to receive a wake-up signal from another transceiver located in another [e.g., neighboring] cell of the wireless communication system].

In embodiments, the other transceiver is located in another cell than the transceiver [e.g., in an intersection area of two cells],wherein the wake-up signal configuration message depends on another wake-up signal configuration used by the other transceiver and/or the other cell [e.g., in order to synchronize the wake-up signal configurations of the cell of the transceiver and the other cell of the other transceiver, e.g., via the central transceivers of the cell and the other cell, e.g., via the x2 interface].

In embodiments, the transceiver is configured to transmit a wake-up signal configuration message to the other transceiver, the wake-up signal configuration message describing a wake-up signal configuration of the transceiver.

In embodiments, the reception mode configuration signal is a go-to-sleep signal, wherein the transceiver is configured to switch [e.g., the receiver part], in response to the reception of the go-to-sleep signal, into
- the low-power reception mode, or
- the sleep mode.

In embodiments, the transceiver is configured to switch in response to the reception of go-to-sleep signal into the respective mode immediately or a after a preconfigured delay time.

In embodiments, the go-to-sleep signal is a unicast, groupcast, or broadcast go-to-sleep signal.

In embodiments, the go-to-sleep signal is configured to signal a go-to-sleep indication in the physical layer or a higher layer.

In embodiments, a go-to-sleep indication of the go-to-sleep signal
- is mapped in the time and/or frequency domain to symbols reserved for an automatic gain control or a hybrid automatic repeat request, HARQ, feedback,
- or is mapped in the time and/or frequency domain to control or data symbols,
- or is aligned in the time and/or frequency domain aligned with a synchronization signal [e.g., preconfigured or configured by higher layers].

In embodiments, a go-to-sleep indication of the go-to-sleep signal is attached to a last data message or data transmission from the other transceiver to the transceiver.

In embodiments, the transceiver is configured to transmit a further go-to-sleep signal to the other or a further other transceiver of the wireless communication system, the further go-to-sleep signal indicating that the transceiver will change into the low-power reception or sleep mode.

In embodiments, the reception mode configuration signal is configured to signal [e.g., comprises an information signaling] a stay awake indication, wherein the transceiver is configured to switch [e.g., from the DRX mode] into the normal reception mode in response to a detection of the stay awake indication.

In embodiments, the stay awake indication is signaled on a medium access control, MAC, radio resource control, RRC, or application layer.

In embodiments, the stay awake indication is transmitted in combination or after transmission of a periodic transmission.

Further embodiment provide a transceiver of a wireless communication system, wherein the transceiver is configured to operate in a [e.g., new radio, NR] sidelink in-coverage, out of coverage or partial coverage scenario [e.g., NR sidelink mode [e.g., mode 1 or mode 2]], in which resources for a communication [e.g., transmission and/or reception] over the sidelink are (pre-)configured by the wireless communication system or allocated or scheduled autonomously by the transceiver, wherein the transceiver is configured to receive a transmission [e.g., control or data transmission] over the sidelink from another transceiver of the wireless communication system, wherein the transmission from the other transceiver is aligned with an on-duration of a discontinuous reception of the transceiver.

In embodiments, the transceiver is configured to align the transmission to the other transceiver by selecting resources for the transmission considering the on-duration of a discontinuous reception of the other transceiver.

Further embodiment provide a transceiver of a wireless communication system, wherein the transceiver is configured to operate in a [e.g., new radio, NR] sidelink in-coverage, out of coverage or partial coverage scenario [e.g., NR sidelink mode [e.g., mode 1 or mode 2]], in which resources for a communication [e.g., transmission and/or reception] over the sidelink are (pre-)configured by the wireless communication system or allocated or scheduled autonomously by the transceiver, wherein the transceiver is configured to transmit over the sidelink a reception mode configuration signal to another transceiver [e.g., first UE] of the wireless communication system, wherein the reception mode configuration signal is configured to control the other transceiver to change a reception mode responsive to the reception of the reception mode configuration signal.

In embodiments, the sidelink a reception mode configuration signal is configured to control the other transceiver to change a reception mode into one out of the following reception modes
- a discontinuous reception mode,
- a normal reception mode,
- a low-power reception mode,
- a sleep mode.

In embodiments, the reception mode configuration signal is configured to signal [e.g., comprises an information signaling] an activation of the discontinuous reception mode or a deactivation of the discontinuous reception mode.

In embodiments, the activation of the discontinuous reception mode or the deactivation of the discontinuous reception mode is signaled in the physical layer.

In embodiments, the activation of the discontinuous reception mode or the deactivation of the discontinuous reception mode is signaled by means of a priority or importance information.

In embodiments, the activation of the discontinuous reception mode or the deactivation of the discontinuous reception mode is signaled in one out of
- a first stage sidelink control information, SCI,
- a second stage sidelink control information, SCI,
- a combination of the first stage sidelink control information, SCI, and the second stage sidelink control information, SCI.

In embodiments, the transceiver is configured to multiplex an information signaling the activation or deactivation of the discontinuous reception mode with a transmission of an automatic gain control information.

For example, the transmission of the automatic gain control information is time division multiplexed, frequency division multiplexed, and/or code division multiplexed with the information signaling of the activation or deactivation of the discontinuous reception mode.

In embodiments, the reception mode configuration signal is a wake-up signal.

In embodiments, the wake-up signal comprises a known sequence [e.g., known to the transceiver] [e.g., a Zadoff-Chu sequence or a pseudo-noise sequence].

In embodiments, the transceiver is configured transmit the wake-up signal in preconfigured slots or periods [e.g., configured via DCI or a higher layer message [e.g., RRC]].

In embodiments, the transceiver is configured
- to map a wake-up sequence of the wake-up signal in the time and/or frequency domain to symbols reserved for an automatic gain control or a hybrid automatic repeat request, HARQ, feedback,
- or to map a wake-up sequence of the wake-up signal in the time and/or frequency domain to control or data symbols,
- or to align a wake-up sequence of the wake-up signal in the time and/or frequency domain with a synchronization signal [e.g., preconfigured or configured by higher layers].

In embodiments, the wake-up signal is a unicast, groupcast or broadcast wake-up signal.

In embodiments, the wake-up signal addresses only the other transceiver or a group of transceivers, wherein the other transceiver is part of the group of transceivers.

In embodiments, the transceiver is configured to transmit to the other transceiver a wake-up signal configuration message [e.g., transmitted on a periodic or non-periodic basis].

In embodiments, the transceiver is configured to adjust at least one parameter of a wake-up signal transmission configuration used for transmitting the wake-up signal based on an area the transceiver is located [e.g., validity area or one or multiples zone(s)].

In embodiments, the transceiver is configured to transmit to a base station of the wireless communication system a wake-up signal configuration message describing a wake-up signal configuration to be used by the other transceiver.

In embodiments, the other transceiver is located in another cell than the transceiver [e.g., in an intersection area of two cells], wherein the wake-up signal configuration message is relayed by the base station via a base station of the other cell to the other transceiver [e.g., in order to synchronize the wake-up signal configurations of the cell of the transceiver and the other cell of the other transceiver].

In embodiments, the transceiver is configured to receive a wake-up signal configuration message from the other transceiver, wherein the transceiver is configured to adjust at least one parameter of a wake-up signal transmission configuration used for transmitting the wake-up signal based on the wake-up signal configuration message.

In embodiments, the reception mode configuration signal is a go-to-sleep signal.

In embodiments, the go-to-sleep signal is configured to control the other transceiver to switch into the respective mode immediately or a after a preconfigured delay time.

In embodiments, the go-to-sleep signal is a unicast, groupcast, or broadcast go-to-sleep signal.

In embodiments, the go-to-sleep signal is configured to signal a go-to-sleep indication in the physical layer or a higher layer.

In embodiments, the transceiver is configured
- to map a go-to-sleep indication of the go-to-sleep signal in the time and/or frequency domain to symbols reserved for an automatic gain control or a hybrid automatic repeat request, HARQ, feedback,
- or to map go-to-sleep indication of the go-to-sleep signal in the time and/or frequency domain to control or data symbols,
- or to align a go-to-sleep indication of the go-to-sleep signal in the time and/or frequency domain with a synchronization signal [e.g., preconfigured or configured by higher layers].

In embodiments, the transceiver is configured to attach a go-to-sleep indication of the go-to-sleep signal to a last data message or data transmission from the other transceiver to the transceiver.

In embodiments, the transceiver is configured to transmit a further go-to-sleep signal to the other transceiver, the further go-to-sleep signal indicating that the transceiver will change into the low-power reception or sleep mode.

In embodiments, the reception mode configuration signal is configured to signal [e.g., comprises an information signaling] a stay awake indication.

In embodiments, the stay awake indication is signaled on a medium access control, MAC, radio resource control, RRC, or application layer.

In embodiments, the transceiver is configured to transmit the stay awake indication in combination or after transmission of a periodic transmission.

Further embodiments provide a transceiver of a wireless communication system, wherein the transceiver is configured to operate in a [e.g., new radio, NR] sidelink in-coverage, out of coverage or partial coverage scenario [e.g., NR sidelink mode [e.g., mode 1 or mode 2]], in which resources for a communication [e.g., transmission and/or reception] over the sidelink are (pre-)configured by the wireless communication system or allocated or scheduled autonomously by the transceiver, wherein the transceiver is configured to perform a transmission [e.g., control or data transmission] over the sidelink to another transceiver of the wireless communication system, wherein the transceiver is configured to align the transmission to the other transceiver with an on-duration of a discontinuous reception of the other transceiver.

In embodiments, the transceiver is configured to align the transmission to the other transceiver in dependence on discontinuous reception information message received from the other transceiver, the discontinuous reception information message describing the on-duration of the discontinuous reception.

Further embodiments provide a method for operating a transceiver [e.g., first UE] of a wireless communication system. The method comprises a step of operating the transceiver in a [e.g., new radio, NR] sidelink in-coverage, out of coverage or partial coverage scenario [e.g., NR sidelink mode [e.g., mode 1 or mode 2]], in which resources for a communication [e.g., transmission and/or reception] over the sidelink are (pre-)configured by the wireless communication system or allocated or scheduled autonomously by the transceiver. Further, the method comprises a step of receiving over the sidelink a reception mode configuration signal from another transceiver [e.g., second UE] of the wireless communication system Further, the method comprises a step of changing a reception mode responsive to the reception of the reception mode configuration signal.

Further embodiments provide a method for operating a transceiver [e.g., first UE] of a wireless communication system. The method comprises a step of operating the transceiver in a [e.g., new radio, NR] sidelink in-coverage, out of coverage or partial coverage scenario [e.g., NR sidelink mode [e.g., mode 1 or mode 2]], in which resources for a communication [e.g., transmission and/or reception] over the sidelink are (pre-)configured by the wireless communication system or allocated or scheduled autonomously by the transceiver. Further, the method comprises a step of receiving a transmission [e.g., control or data transmission] over the sidelink from another transceiver of the wireless communication system, wherein the transmission from the other transceiver is aligned with an on-duration of a discontinuous reception of the transceiver.

Further embodiments provide a method for operating a transceiver [e.g., first UE] of a wireless communication system. The method comprises a step of operating the transceiver in a [e.g., new radio, NR] sidelink in-coverage, out of coverage or partial coverage scenario [e.g., NR sidelink mode [e.g., mode 1 or mode 2]], in which resources for a communication [e.g., transmission and/or reception] over the sidelink are (pre-)configured by the wireless communication system or allocated or scheduled autonomously by the transceiver. Further, the method comprises a step of performing a transmission [e.g., control or data transmission] over the sidelink to another transceiver of the wireless communication system, wherein the transmission to the other transceiver is aligned with an on-duration of a discontinuous reception of the other transceiver.

Further embodiments provide a method for operating a transceiver [e.g., first UE] of a wireless communication system. The method comprises a step of operating the transceiver in a [e.g., new radio, NR] sidelink in-coverage, out of coverage or partial coverage scenario [e.g., NR sidelink mode [e.g., mode 1 or mode 2]], in which resources for a communication [e.g., transmission and/or reception] over the sidelink are (pre-)configured by the wireless communication system or allocated or scheduled autonomously by the transceiver. Further, the method comprises a step of transmitting over the sidelink a reception mode configuration signal to another transceiver [e.g., first UE] of the wireless communication system, wherein the reception mode configuration signal is configured to control the other transceiver to change a reception mode responsive to the reception of the reception mode configuration signal.

Embodiments exploit different means for NR-V2X communication through which power consumption can be reduced for, e.g., vulnerable road users (VRU), including, P-UE, who have a limited-battery capacity. DRX and WUS are two of the features out of many in NR that are seen to have the potential to assist the UE to minimize the UE power consumption in different conditions and scenarios. A UE can adopt one or a combination of the following features to reduce power consumption when required or configured by the network:
- DRX on FR1and FR2,
- WUS,
- Go-To-Sleep, and
- priority based reception.

Subsequently, the following embodiments, which may be implemented by themselves or in any combination, are described:
- DRX on / off signaling on the physical layer
   Proposes the physical layer signaling procedure for DRX, wherein a priority-based reception can be indicated in SCI or AGC symbol.
- Wake-Up Signal (WUS)
   A WUS with a low complexity is discussed/proposed for SL, wherein DRX is replaced with WUS to further reduce power consumption in UEs.
- Go-To-Sleep (GTS) on PHY or higher layers, e.g., layer 2 Opposite to WUS, the reception would be discontinued based on reception of this signal, where parameters may provide details at which point-of-time, under which conditions and for which period the reception of signals should be discontinued
- "Stay awake" indication on higher layer
   On higher layer (e.g., MAC, RRC) an indication could be added, e.g., to any periodic messages, such as CAM messages, indicating to the receiving UE to stay awake. This "stay awake" indication could even preempt DRX settings (e.g., to go to sleep), for example in case of critical conditions indicating to UEs to be prepared for continuous reception of latency critical messages, optionally for a defined period of time.
- Resource selection procedure considering DRX of intended receiver users
   The resource selection procedure is enhanced such that the 'DRX-ON' duration / DRX configuration of the intended receivers is taken into consideration.

### Embodiment 1: DRX On / Off Signaling on the Physical Layer

In embodiments, the DRX on/off indication can be signaled in the physical layer. For example, the DRX on/off indication can be signaled by means of one or more of the following options:
- Importance/priority bits indicated in the 1^{st} stage SCI, or alternatively in the 2^{nd} stage SCI or a combination of 1^{st} and 2^{nd} stage SCI, through which a UE goes to sleep, for example, if importance/priority is low. These bits can be configured by the higher layer or based on UE implementation. The corresponding Information elements of the higher layers can be adapted as needed.
- Modifying the AGC (automatic gain control) symbol and adding a Power-Saving Importance Signal (PSIS) within the AGC.

In embodiments, a transmitting UE (e.g., a car) can introduce an "importance" indicator in the 1^{st} stage (or 2^{nd} stage) SCI or any combination of the both. One option is to consider the already existing priority value in the 1^{st} SCI. Alternatively, the importance indicator can be signaled by, for example, using new bits or CRC scrambling (with a pattern known to all UEs) or DMRS parameters. A new indication will allow more targeted use of the power saving indication. The behavior can be as explained below:
- For example, when the battery is low, (P-)UEs can use this indication field (e.g., importance bit or indicator or priority bit) in the 1^{st} stage SCI to determine the importance of the transport block. Only if the importance is above a certain threshold or category, the (P-)UE decodes the PSSCH. Otherwise, the (P-)UE can sleep for the rest of the slot.
- Another possibility for packet screening (and going to sleep) is to use the zone id (which is in the 2^{nd} stage SCI). The idea is that the zone id may allow P-UE to estimate distance and thus allow to avoid receiving transmissions from outside a certain distance. The distance estimation depends also on the zone size.

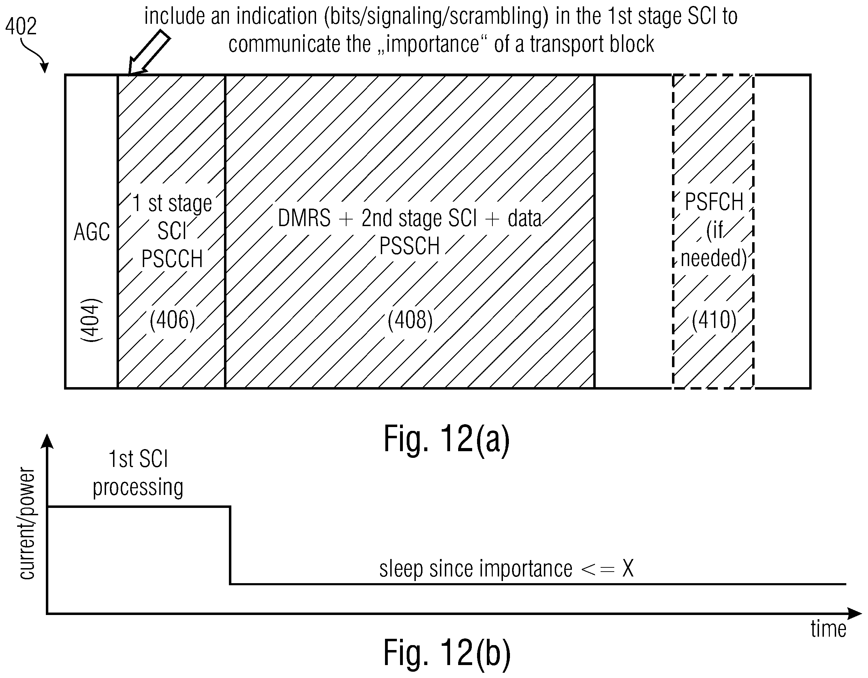

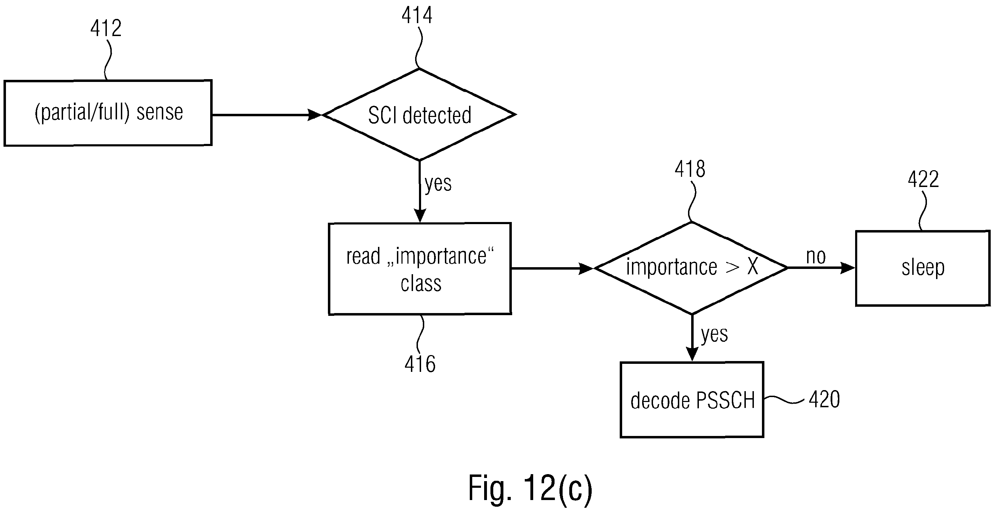

Fig. 12 shows a schematic illustration of an DRX on/off signaling by including an indication (e.g., importance/priority indication) in the first stage SCI (e..g., importance/priority based sleep (can be within DRX on or otherwise)). Specifically, Fig. 12a shows a schematic illustration of a sidelink resource block 402 including an AGC transmission 404, a 1^{st} stage SCI transmission 406 in the PSCCH, a DMRS, 2^{nd} stage SCI and data transmission 408 in the PSSCH, and an optional transmission in the PSFCH 410. As indicated in Fig. 12a, an indication (e.g., bits/signaling/scrambling) can be included in the 1^{st} stage SCI 406 to communicate the importance/priority of a transport block. Fig. 12b shows in a diagram a current/power consumption of the UE for receiving/processing the resource block 402, wherein it is exemplarily assumed that the importance/priority is smaller than a predefined threshold (importance <= x), so that the UE switches back to a low-power mode (e.g., sleep mode) after processing the 1^{st} stage SCI. Thereby, in Fig. 12b the ordinate denotes the current/power consumption and the abscissa the time. Further, Fig. 12c shows a schematic view of a flow chart of a method for evaluating the indication (e.g., importance/priority indication) included in the first stage SCI. In a first step 412, a partial or full sense can be performed. In a second step, the 1^{st} stage SCI can be detected. If the 1^{st} stage SCI was detected successfully, then, in a third step 416, the importance/priority included in the 1^{st} stage SCI can be read. In a fourth step 418 it can be determined, whether the importance/priority is greater than a predefined threshold. If the importance/priority is greater than a predefined threshold, then the UE may decode the PSSCH in a fifth step 420 or else switch into a sleep mode (sixth step 422).

An alternative approach (instead of the 1^{st} or 2^{nd} stage SCI indication) is to leverage the AGC OFDM symbol. This may be done by time-domain multiplexing, frequency/subcarrier-domain multiplexing or code-domain multiplexing a power saving importance signal (PSIS) with the AGC symbol. In the following, these options are explained:

### Option A: Frequency/code division multiplexing

Even if the whole AGC symbol contains contribution from the PSIS, a receiver implementation may have different choices in processing the combined AGC and PSIS signal.

One possibility is that the receiver processes the symbol similar to any other OFDM symbol. Here, the receiver uses the entire symbol in the detection of the PSIS.

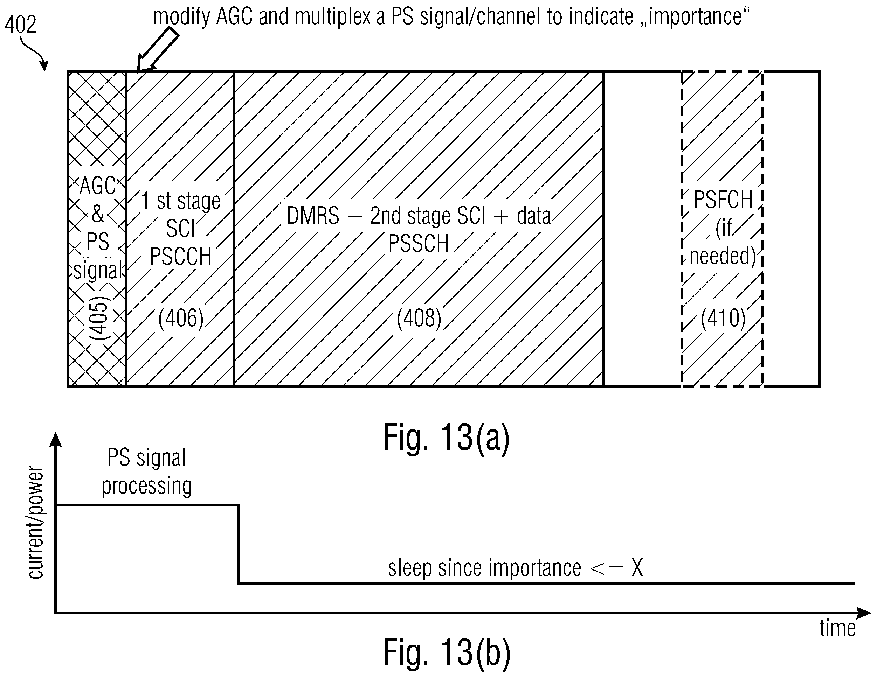

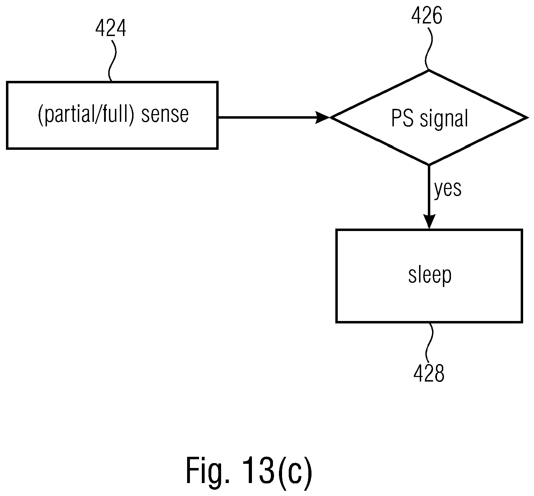

In another possibility, to detect the PSIS, a receiver splits the OFDM symbol into two portions along the time and use the later portion for the detection of the PSIS. This possibility allows the receiver to benefit from AGC settling during the early portion of the symbol. The concept is illustrated in Fig. 13, which shows a schematic illustration of an DRX on/off signaling by modifying an AGC transmission and multiplexing a power saving (PS) signal to indicate the importance/priority (e.g., power saving importance signal introduced by frequency-domain/code-domain multiplexing).

Specifically, Fig. 13a shows a schematic illustration of a sidelink resource block 402 including an AGC transmission multiplexed with a transmission of a power saving signal 405, a 1^{st} stage SCI transmission 406 in the PSCCH, a DMRS, 2^{nd} stage SCI and data transmission 408 in the PSSCH, and an optional transmission in the PSFCH 410. As indicated in Fig. 13a, the AGC transmission can be modified and multiplexed with a PS signa/channel to indicate the importance/priority. Fig. 13b shows in a diagram a current/power consumption of the UE for receiving/processing the resource block 402, wherein it is exemplarily assumed that the importance/priority is smaller than a predefined threshold (importance <= x), so that the UE switches back to a low-power mode (e.g., sleep mode) after processing the transmission of the power saving signal 405. Thereby, in Fig. 13b the ordinate denotes the current/power consumption and the abscissa the time. Further, Fig. 13c shows a schematic view of a flow chart of a method for evaluating the indication (e.g., importance/priority indication) transmitted via the power saving signal 405. In a first step 424, a partial or full sense can be performed. In a second step, the power saving signal 405 can be detected. If power saving signal 405 was detected successfully, then, in a third step 428, the UE may switch into a sleep mode.

### Option B: Time-domain multiplexing

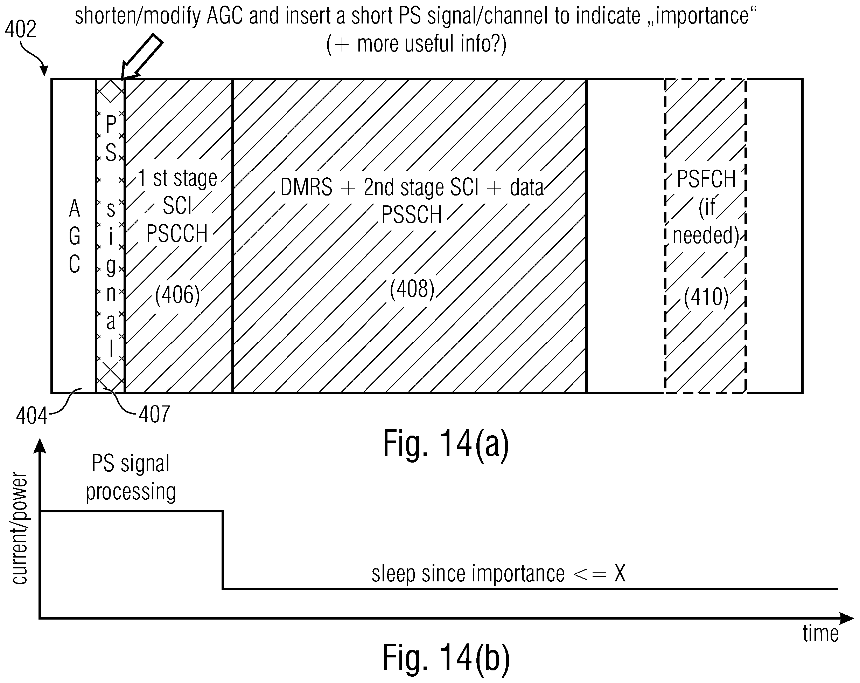

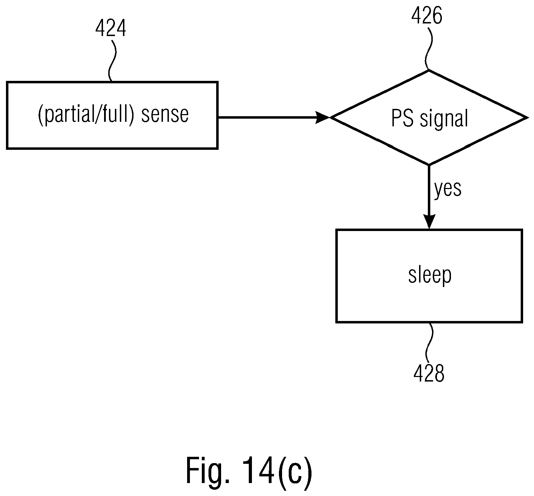

A PSIS can be inserted at the end of the AGC as shown in Fig. 14.

Thereby, Fig. 14 shows a schematic illustration of an DRX on/off signaling by modifying (shorting or puncturing) an AGC transmission and adding a power saving (PS) signal at the end of the AGC transmission to indicate the importance/priority (e.g., power saving importance signal introduced by shortening/puncturing the AGC).

Specifically, Fig. 14a shows a schematic illustration of a sidelink resource block 402 including an AGC transmission 404 that is shortened or punctured for appending a transmission of a power saving signal 407, a 1^{st} stage SCI transmission 406 in the PSCCH, a DMRS, 2^{nd} stage SCI and data transmission 408 in the PSSCH, and an optional transmission in the PSFCH 410. As indicated in Fig. 14a, the AGC can be shortened/modified and short PS signal/channel can be inserted to indicate the importance/priority. Fig. 14b shows in a diagram a current/power consumption of the UE for receiving/processing the resource block 402, wherein it is exemplarily assumed that the importance/priority is smaller than a predefined threshold (importance <= x), so that the UE switches back to a low-power mode (e.g., sleep mode) after processing the transmission of the power saving signal 405. Thereby, in Fig. 14b the ordinate denotes the current/power consumption and the abscissa the time. Further, Fig. 14c shows a schematic view of a flow chart of a method for evaluating the indication (e.g., importance/priority indication) transmitted via the power saving signal 405. In a first step 424, a partial or full sense can be performed. In a second step, the power saving signal 405 can be detected. If power saving signal 405 was detected successfully, then, in a third step 428, the UE may switch into a sleep mode.

In other words, as shown in Fig. 14, the AGC symbol is shortened or punctured to make space for inserting a PSIS towards the end of the symbol. This possibility allows the receiver to benefit from AGC settling during the early portion of the symbol.

### Embodiment 2: Wake-Up Signal (WUS)

In embodiments, the WUS can be specified in such a way that it can be detected with a low power and/or low complexity receiver. For example, a detector with negligible power consumption can be "always on" while most of the circuitry of the UE platform is turned off. This allows ad hoc communication at arbitrary times which enables time critical warnings or alarms, directly, without waiting for an opportunity, e.g., a DRX cycle on time. It can act as a wake up and warning signal.

As example, the WUS can be a simple signature like the WUS for eMTC/NB-IoT or the primary synchronization signal (PSS), i.e. a Zadoff-Chu sequence as used in LTE or a Pseudo-Noise (PN) sequence used in NR or any other suitable signal. Such signatures can be defined in the frequency domain or in the time domain and can be detected with a simple matched filter preferably in the time domain, i.e. only a very small area of a baseband chip needs to be active. The power consumption is further reduced since the whole carrier bandwidth is not needed, allowing down sampling and reduced bit widths.

A WUS receiver can be a real always-on receiver or can be configured via DCI or higher layer messages (e.g., RRC) to be active on preconfigured time slots. If WUS is activated in the cell but no configuration available, the receiver will usually be an "always on" receiver. The configuration of the WUS could include, e.g., on / off WUS periods, a signal strength threshold (e.g., only if the received WUS signal exceeds the threshold, group specific WUS).

The mapping on resource elements can be done according to the principles used for the synchronization signal block (SSB). For example,
- in the time/frequency domain any symbol(s) not used for control/data. Candidates might be for, e.g., the AGC symbol or the symbols for the HARQ feedback, or
- in the time/frequency domain any symbol(s) including control/data symbols; it is the responsibility of the base station to mitigate collisions, or
- in the time/frequency domain aligned with the synchronization signals, preconfigured or configured by higher layers.

The WUS can be unicast and/or groupcast and/or broadcast. For example, signatures as mentioned above are generated in different forms, which allows to address
- a single UE or group of UEs, or
- an unspecified or different type of a warnings or alarms, or
- any combination indicated in the PSIS described above.

Within a group of UEs,
- a dedicated (header) UE may transmit the WUS configuration to the group in a periodic or aperiodic manner,
- and/or any UE may be allowed to transmit the WUS when required.

Whether the WUS is received / transmitted can be configured, e.g., by higher layer. For example, WUS could be enabled or disabled. Only a WUS enabled UE will receive WUIS signaling.

Alternatively, the following options may apply, when the WUS is configured at the transmitter or receiver UEs or both:

### Option A - In Coverage

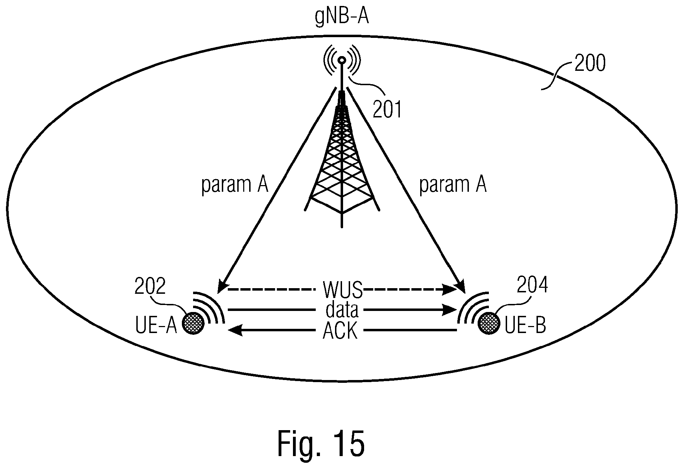

If both UEs are camping in the same cell, both UEs may use the same WUS configuration. Fig. 15 shows such an in-coverage scenario. Specifically, Fig. 15 shows a schematic view of an in-coverage scenario with two UEs 202 and 204 that are camping in the same cell 200 that is served by a base station 201 (e.g., gNB-A). As indicated in Fig. 15, the UEs (UE-A) and 204 (UE-B) may receive from the base station 201 parameters (Param A) indicating the WUS configuration to be used by the two UEs (UE-A) and 204 (UE-B), such that the first UE 202 (UE-A) may transmit a WUS to the second UE 204 (UE-B), that switches into a (normal) reception mode in response to the reception of the WUS and is thus able to receive a data transmission from the first UE 202 (UE-A) and acknowledge same by an ACK transmission.

In case that the UEs are camping in different cells, the configuration of the UEs may differ and communication with WUS may be impaired or not possible at all.

### Option A1

In a scenario, when two UEs are in the intersection area between two cells, the WUS parameters can be configured based on an area, e.g., a validity area or one or multiple zone(s), so that both UEs are instructed to use the same WUS configuration.

### Option A2

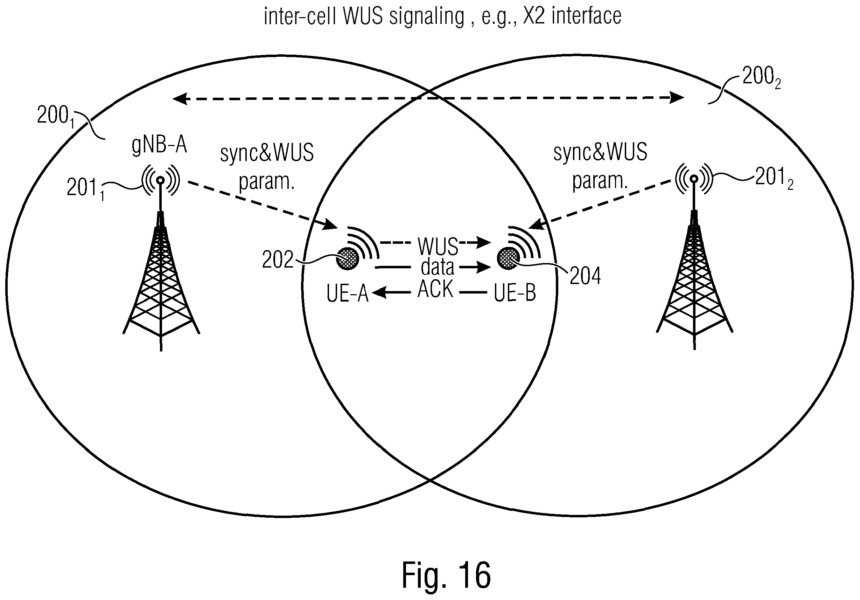

In another scenario where both UEs are located in the intersection area, two gNBs or cells should be able to exchange signaling information, e.g., through X2 interface, in order to have the same WUS for WUS-enabled users. This can be done with or without a dedicated intersection area/zone definition. This option is especially useful in a small cell scenario where UEs (pedestrians) move quickly between cells. Fig. 16 shows such a scenario (same configuration from two different gNBs). Specifically, Fig. 16 shows a schematic view of a scenario in which two UEs 202 (UE-A) and 204 (UE-B) are located in an intersection area of two cells 200₁ and 200₂ that are served by two base stations (e.g., gNBs) 201₁ and 201₂. As indicated in Fig. 16, the two base stations (e.g., gNBs) 201₁ and 201₂ can perform inter-cell WUS signaling (e.g., exchange of WUS parameters), e.g., via the x2 interface, and communicate same to the respective UEs (UE-A) and 204 (UE-B), such that the first UE 202 (UE-A) may transmit a WUS to the second UE 204 (UE-B), that switches into a (normal) reception mode in response to the reception of the WUS and is thus able to receive a data transmission from the first UE 202 (UE-A) and acknowledge same by an ACK transmission.

### Option B - Different WUS configurations

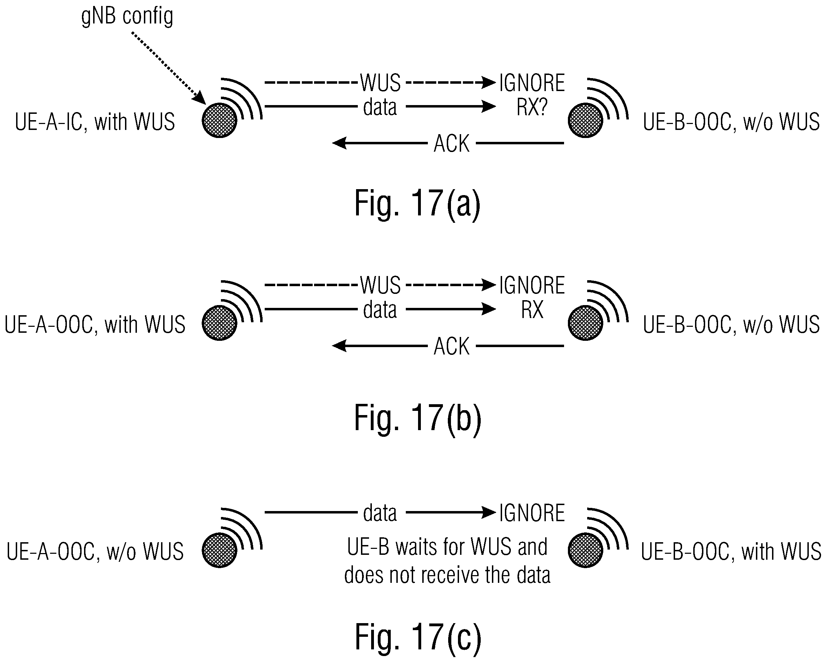

In case two or more UEs have different WUS configurations, for example one is WUS-enabled and another is not, then, messages sent from the non-WUS-enabled UE to the WUS-enabled UE are not received in case one UE is in sleep mode while the other one is transmitting messages, as indicated in Fig. 17.

Specifically, Fig. 17a shows a schematic representation of two UEs with different configurations. A first UE (UE-A) is in-coverage and WUS-enabled, wherein a second UU (UE-B) is out-of-coverage and non-WUS-enabled. In this case, the WUS transmitted from the first UE (UE-A) to the second UE (UE-B) is ignored by the second UE (UE-B), however, since the second UE (UE-B) is switched into a (normal) reception mode, the second UE (UE-B) may receive the data transmission from the first UE (UE-A) and acknowledge same by an ACK transmission.

Fig. 17b shows a schematic representation of two UEs with different configurations. A first UE (UE-A) is out-of-coverage and WUS-enabled, wherein a second UU (UE-B) is out-of-coverage and non-WUS-enabled. In this case, the WUS transmitted from the first UE (UE-A) to the second UE (UE-B) is ignored by the second UE (UE-B), however, since the second UE (UE-B) is switched into a (normal) reception mode, the second UE (UE-B) may receive the data transmission from the first UE (UE-A) and acknowledge same by an ACK transmission.

Fig. 17c shows a schematic representation of two UEs with different configurations. A first UE (UE-A) is out-of-coverage and non-WUS-enabled, wherein a second UU (UE-B) is out-of-coverage and WUS-enabled. In this case, due to the missing transmission of the WUS by the first UE (UE-A), the second UE (UE-B) is not able to receive the data transmission from the first UE (UE-A).

Obviously, a configuration update is necessary to enable a bidirectional communication. This update needs to be initiated by the WUS-enabled UE.

### Embodiment 3: Immediate Sleep Signal / Go-To-Sleep (GTS) Signal (on PHY or layer 2)

Opposite to WUS, the UE may discontinue receiving any signal immediately based on reception of a GTS indication either as signal on the physical layer or as indication on the higher layer, two major type could be distinguished:
1. "GTS command to other UE(s)" from UE / gNB: the receiving UE(s) (e.g., unicast, groupcast, broadcast) go to sleep on reception of the GTS or e.g with delay as defined e.g by further settings. For example, WUS and GTS commend could be used to fully coordinate / synchronize with UEs in proximity the wake-up and sleep periods. Only defined UEs may be configured / be allowed to transmit WUS and GTS commands.
2. "I go to sleep" GTS indicating to other UEs that the transmitting UE that the transmitting UE will go to sleep either immediately or, e.g., with delay as defined by further settings. Any UE may be allowed to transmit the "I go to sleep GTS. For example, this could be used by a UE which is running out of battery to inform this other UEs upfront.

Additional parameters may provide details at which point-of-time and / or under which conditions and / or for which period of time the reception of signals should be discontinued.

The format / type of signaling of both types of GTS signal could be aligned with the WUS defined in the preceding embodiment 2. For example, different signatures than used for WUS could indicate either type of GTS defined above.

Any other formats, indications, or, type of WUS signaling on PHY and "Stay awake" indication on higher layer and any option as discussed in embodiment 2 may apply for GTS as well.

In addition, a GTS indication could be "attached" to the last message or data set transmitted from the TX-UE to the RX-UE to indicate the end of the transmission. Alternatively, instead of attaching a special bit or flag or parameter to the final transmission, an extra message could be used to indicate GTS. This indication of the end of the transmission would allow the receiving UE to go to sleep, whenever the transmission ends.

### Embodiment 4: "Stay awake" indication on higher layer

UEs may be required to stay awake after reception of ,e.g., a periodic message, e.g., in case of critical (e.g., road, traffic, environmental) conditions, e.g., DRX could be some kind "preempted" for a period of time.

Therefore, an additional indication (a bit, a symbol, a parameter, or a message) could be used on the MAC, RRC or application layer, indicating, that the UE should stay awake. For example, a MAC or RRC or application message or an extension to, e.g., a MAC message (e.g., piggyback message) is indicated not let UE(s) go to sleep after reception (as possibly configured by DRX), but stay awake after reception of the "stay awake" indication.

Different to the WUS, any kind higher layer indication such as "stay awake" cannot wake up a UE from sleep mode, but can be received only, in case the UE is able to receive data. Therefore, the "stay awake" indication could, e.g., be transmitted in combination / after reception of periodical messages, as the UE has to wake-up to receive periodical messages in any case, e.g., CAM messages, paging.

### Embodiment 5: Resource selection/sensing procedure considering DRX of intended receiver users

A transmitting UE might consider 'DRX-ON' duration in the resource selection procedure, wherein a 'DRX-ON' and on/off cycle in case of mode 1 (network controlled), is expected to be controlled by the network, i.e., the DRX configuration or any kind of DRX re-configuration would be transmitted. In addition, UEs may assist to adapt the DRX configuration by sending assistance data to the network.

In case of mode 2 (autonomous resource allocation), the communicating UEs (especially) for unicast, groupcast need to exchange the DRX configuration between themselves. Updates on DRX configuration are required, e.g., in case one UE in groupcast has to adapt its DRX configuration e.g., to reduce power consumption. For groupcast or any kind of area / proximity-based communication, a group "Master" may take over the exchange / coordination of DRX configuration between the group members.

The transmitting UE may take either of the following actions when receiving a signaling message indicating DRX feature parameters:
- It put offs the intended transmission to a later time to be ensured that the UEs, whose DRX feature is activated, can receive the message during 'DRX-ON' duration. For example, for periodic transmission, the transmitter UE might delay the periodic transmission in line with the DRX-ON time and the already reserved transmission time instance, i.e. the next period transmission would be performed after the "DRX-ON" time has passed;
- It deactivates the feedback in the resource pool, or reconfigure the feedback channel so that the intended receiver is able to transmit/ not transmit ACK/NACK on the 'DRX-ON' duration;
- It transmits multiple TBs such that one of the TBs could be retrieved by the intended receiver(s) during 'DRX-ON' duration, wherein initial TB might be transmitted before 'DRX-ON' duration and other TBs are transmitted when the intended receiver(s) is/are at 'DRX-ON' duration. The first transmission and the following transmissions could be configured differently. For example, the initial transmission can be configured by HARQ enabled RP, while others are not. Moreover, the initial, second, and third transmissions can be configured with different priorities.

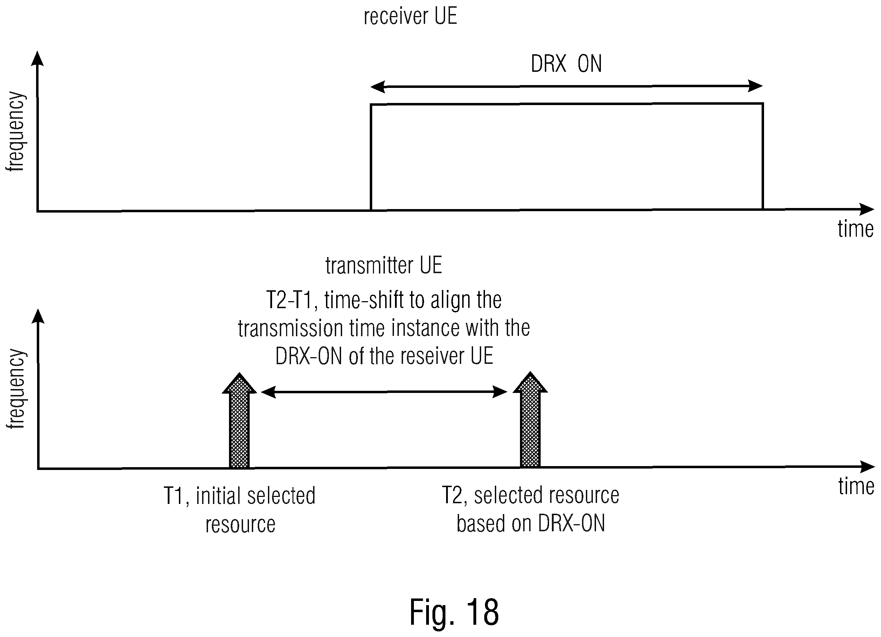

Fig. 18 shows a schematic representation of an example of a resource selection procedure, when a transmitter UE considers the DRX-On duration of intended receivers over the course of radio resource selection procedure.

Alternatively, as an example, a transmitter UE may consider the DRX configuration of a receiver UE in adapting its sensing window, short sensing, DRX configuration, or partial sensing configuration. In this case, the sensing is avoided on resources in which the receiver is turned off due to the DRX configuration. By avoiding useless sensing, energy consumption can be reduced in the transmitter UE.

### Further embodiments

Embodiments described herein allow to save UE battery, that is especially required for battery powered VRU-UE with V2X application. Otherwise, if UEs run out of battery, safety critical messages might not be received. Also VRUs may not use / enable V2X application if the power consumption is considered to be high.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

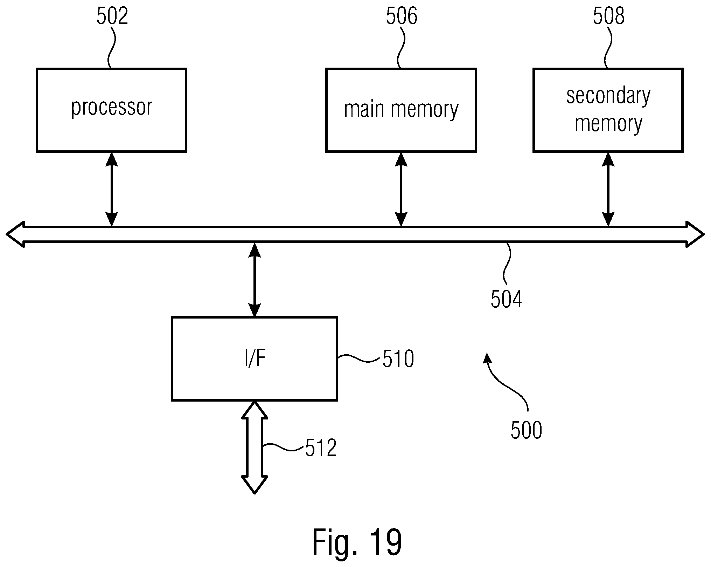

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 19 illustrates an example of a computer system 500. The units or modules as well as the steps of the methods performed by these units may execute on one or more computer systems 500. The computer system 500 includes one or more processors 502, like a special purpose or a general-purpose digital signal processor. The processor 502 is connected to a communication infrastructure 504, like a bus or a network. The computer system 500 includes a main memory 506, e.g., a random-access memory (RAM), and a secondary memory 508, e.g., a hard disk drive and/or a removable storage drive. The secondary memory 508 may allow computer programs or other instructions to be loaded into the computer system 500. The computer system 500 may further include a communications interface 510 to allow software and data to be transferred between computer system 500 and external devices. The communication may be in the from electronic, electromagnetic, optical, or other signals capable of being handled by a communications interface. The communication may use a wire or a cable, fiber optics, a phone line, a cellular phone link, an RF link and other communications channels 512.

The terms "computer program medium" and "computer readable medium" are used to generally refer to tangible storage media such as removable storage units or a hard disk installed in a hard disk drive. These computer program products are means for providing software to the computer system 500. The computer programs, also referred to as computer control logic, are stored in main memory 506 and/or secondary memory 508. Computer programs may also be received via the communications interface 510. The computer program, when executed, enables the computer system 500 to implement the present invention. In particular, the computer program, when executed, enables processor 502 to implement the processes of the present invention, such as any of the methods described herein. Accordingly, such a computer program may represent a controller of the computer system 500. Where the disclosure is implemented using software, the software may be stored in a computer program product and loaded into computer system 500 using a removable storage drive, an interface, like communications interface 510.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### List of References

[1] TS 38.300 (Rel-16) - DTX Overview NR on Uu
[2] TS 38.331 RRC: DTX details
[3] TS 38.321 Medium Access Control (MAC) protocol specification (Release 16); V16.0.0; 2020-03; Section 5.7 DRX (for Uu interface)
[4] RP-193231 New WID on NR sidelink enhancement
[5] TS 36.306 User Equipment (UE) radio access capabilities
[6] ZTE, R1-1900226, on adaptation aspects for NR UE power consumption reduction, 3GPP RAN1 Adhoc meeting #1901, Jan. 2019
[7] Ericsson, R1-1902935, Techniques for UE power saving, 3GPP RAN1 meeting #96, Feb. 2019
[8] 3GPP, 38.213 v 16.1.0, NR; Physical layer procedures for control (Release 16)
[9] EP 3 500 028 A1
[10] HUAWEI ET AL: "KI #1, New Solution: V2X Layer assisted DRX over PC5" 3GPP DRAFT; S2-2006050, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX ; FRANCE; vol. SA WG2, no. E (a-meeting); 20200819 - 20200902 2 September 2020 (2020-09-02), XP051928716, Retrieved from the Internet:
   URL:https://ftp.3gpp.org/tsg_sa/WG2_ Arch/TSGS2_ 140e _Electronic/Docs/ S2-2006050.zip S2-2006050.doc
   [retrieved on 2020-09-02]
[11] SAMSUNG: "On Sidelink Issues and RAN1 Impacts", 3GPP DRAFT; R1-2006172, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE
   vol. RAN WG1, no. a-Meeting; 20200817 - 20200828 7 August 2020 (2020-08-07), XP051915226,
   Retrieved from the Internet:
      URL:https://ftp.3gpp.org/tsg_ran/WG1_RL 1/TSGR1_102-e/Docs/ R1 -2006172.zip R1-2006172.docx
      [retrieved on 2020-08-07]
[12] INTEL CORPORATION: "Sidelink enhancements for UE power saving", 3GPP DRAFT; R1-2005896, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX ; FRANCE
   vol. RAN WG1, no. e-Meeting; 20200817 - 20200828 8 August 2020 (2020-08-08), XP051917798,
   Retrieved from the Internet:
      URL:https://ftp.3gpp.org/tsg_ran/WG 1_RL1/TSGR1_102-e/Docs/ R1-2005896.zip R1-2005896 Intel - eV2X Power Saving.docx R1-2005896.zip R1-2005896 Intel - eV2X Power Saving.docx
      [retrieved on 2020-08-08]
[13] "LTE; 5G; Overall description of Radio Access Network (RAN) aspects for Vehicle-to-everything (V2X) based on LTE and NR (3GPP TR 37.985 version 16.0.0 Release 16)", ETSI TECHNICAL REPORT, EUROPEAN TELECOMMUNICATIONS STANDARDS INSTITUTE (ETSI), 650, ROUTE DES LUCIOLES; F-06921 SOPHIA-ANTIPOLIS ; FRANCE
   vol. 3GPP RAN3GPP RAN, no. V16.0.0 29 July 2020 (2020-07-29), pages 1-37, XP014379053,
   Retrieved from the Internet:
      URL:http://www.etsi.org/deliver/etsi_tr/ 137900_ 137999/137985/16.00.00_60/tr_ 137985v160000p.pdf
      [retrieved on 2020-07-29]

### Abbreviations

- WUS: Wake-up signal
- VRU: Vulnerable road user
- DRX: Discontinuous reception
- V-UE: Vehicular UE
- P-UE: Pedestrian UE: should not be limited to pedestrians, but represents any (mostly battery-based) UE with a need to save power, e.g., electrical cars, cyclicsts, vulnerable road user
- UE: User Equipment
- SL: Sidelink
- NR: New Radio
- RRC: Radio Resource Control

## Claims

1. Transceiver (202) of a wireless communication system,
wherein the transceiver (202) is configured to operate in a sidelink in-coverage, out of coverage or partial coverage scenario, in which resources for a communication over the sidelink are (pre-)configured by the wireless communication system or allocated or scheduled autonomously by the transceiver (202),
wherein the transceiver (202) is configured to receive over the sidelink a reception mode configuration signal from another transceiver (204) of the wireless communication system,
wherein the transceiver (202) is configured to change a reception mode responsive to the reception of the reception mode configuration signal,
wherein the reception mode configuration signal is a wake-up signal,
wherein the transceiver (202) is configured to switch, in response to the wake-up signal, into the normal reception mode,
**characterised in that**
a wake-up sequence of the wake-up signal
- is mapped in the time and/or frequency domain to symbols reserved for an automatic gain control or a hybrid automatic repeat request, HARQ, feedback,
- or is mapped in the time and/or frequency domain to control or data symbols,
- or is aligned in the time and/or frequency domain aligned with a synchronization signal.

2. Transceiver (202) according to claim 1,
wherein the transceiver (202) is configured to change the reception mode by switching, in dependence on the reception mode configuration signal, into one out of the following reception modes
- a discontinuous reception mode,
- a normal reception mode,
- a low-power reception mode,
- a sleep mode.

3. Transceiver (202) according to one of claims 1 to 2,
wherein the transceiver (202) is configured to detect the wake-up signal using only a portion of its receiver chain,
or wherein the transceiver (202) is configured to detect the wake-up signal using a separate wake-up signal detector,
or wherein the transceiver (202) is configured to detect the wake-up signal continuously,
or wherein the transceiver (202) is configured to detect the wake-up signal in preconfigured slots or periods.

4. Transceiver (202) according to one of the claims 1 to 3,
wherein the wake-up signal comprises a known sequence, and/or
wherein the wake-up signal is a unicast, groupcast or broadcast wake-up signal, and/or
wherein the wake-up signal addresses only the transceiver (202) or a group of transceivers, wherein the transceiver (202) is part of the group of transceivers.

5. Transceiver (202) according to one of the claims 1 to 4,
wherein the transceiver (202) is configured to receive from the other transceiver (204) or a dedicated wake-up signal configuration transceiver a wake-up signal configuration message, wherein the transceiver (202) is configured to adjust at least one parameter of a wake-up signal reception configuration used for receiving the wake-up signal based on the wake-up signal configuration message,
or wherein the transceiver (202) is configured to adjust at least one parameter of a wake-up signal reception configuration used for receiving the wake-up signal based on an area the transceiver (202) is located,
or wherein the transceiver (202) is configured to receive from a base station of the wireless communication systems a wake-up signal configuration message, wherein the transceiver (202) is configured to adjust at least one parameter of a wake-up signal reception configuration used for receiving the wake-up signal based on the wake-up signal configuration message.

6. Transceiver (202) according to one of the claims 1 to 5,
wherein the transceiver (202) is configured to transmit a wake-up signal configuration message to the other transceiver (204), the wake-up signal configuration message describing a wake-up signal configuration of the transceiver (202).

7. Transceiver (204) of a wireless communication system,
wherein the transceiver (204) is configured to operate in a sidelink in-coverage, out of coverage or partial coverage scenario, in which resources for a communication over the sidelink are (pre-)configured by the wireless communication system or allocated or scheduled autonomously by the transceiver (204),
wherein the transceiver (204) is configured to transmit over the sidelink a reception mode configuration signal to another transceiver (202) of the wireless communication system,
wherein the reception mode configuration signal is configured to control the other transceiver (202) to change a reception mode responsive to the reception of the reception mode configuration signal,
wherein the reception mode configuration signal is a wake-up signal,
wherein the transceiver (204) is configured
- to map a wake-up sequence of the wake-up signal in the time and/or frequency domain to symbols reserved for an automatic gain control or a hybrid automatic repeat request, HARQ, feedback,
- or to map a wake-up sequence of the wake-up signal in the time and/or frequency domain to control or data symbols,
- or to align a wake-up sequence of the wake-up signal in the time and/or frequency domain with a synchronization signal.

8. Transceiver (204) according to claim 7,
wherein the sidelink a reception mode configuration signal is configured to control the other transceiver (202) to change a reception mode into one out of the following reception modes
- a discontinuous reception mode,
- a normal reception mode,
- a low-power reception mode,
- a sleep mode.

9. Transceiver (204) according to one of the claims 7 to 8,
wherein the wake-up signal comprises a known sequence, and/or
wherein the wake-up signal is a unicast, groupcast or broadcast wake-up signal, and/or
wherein the wake-up signal addresses only the other transceiver (202) or a group of transceivers, wherein the other transceiver (202) is part of the group of transceivers.

10. Transceiver (204) according to one of the claims 7 to 9,
wherein the transceiver (204) is configured transmit the wake-up signal in preconfigured slots or periods.

11. Transceiver (204) according to one of the claims 7 to 10,
wherein the transceiver (204) is configured to transmit to the other transceiver (204) a wake-up signal configuration message,
or wherein the transceiver (204) is configured to adjust at least one parameter of a wake-up signal transmission configuration used for transmitting the wake-up signal based on an area the transceiver (204) is located,
or wherein the transceiver (204) is configured to transmit to a base station of the wireless communication system a wake-up signal configuration message describing a wake-up signal configuration to be used by the other transceiver (202).

12. Transceiver (204) according to one of the claims 7 to 11,
wherein the transceiver (204) is configured to receive a wake-up signal configuration message from the other transceiver (202),
wherein the transceiver (204) is configured to adjust at least one parameter of a wake-up signal transmission configuration used for transmitting the wake-up signal based on the wake-up signal configuration message.

13. Method for operating a transceiver (202) of a wireless communication system, the method comprising:
operating the transceiver (202) in a sidelink in-coverage, out of coverage or partial coverage scenario, in which resources for a communication over the sidelink are (pre-)configured by the wireless communication system or allocated or scheduled autonomously by the transceiver (202),
receiving over the sidelink a reception mode configuration signal from another transceiver (204) of the wireless communication system,
changing a reception mode responsive to the reception of the reception mode configuration signal,
wherein the reception mode configuration signal is a wake-up signal,
wherein changing the reception mode comprises switching, in response to the wake-up signal, into the normal reception mode,
**characterised in that** a wake-up sequence of the wake-up signal
- is mapped in the time and/or frequency domain to symbols reserved for an automatic gain control or a hybrid automatic repeat request, HARQ, feedback,
- or is mapped in the time and/or frequency domain to control or data symbols,
- or is aligned in the time and/or frequency domain aligned with a synchronization signal.

14. Method for operating a transceiver (204) of a wireless communication system, the method comprising:
operating the transceiver (204) in a sidelink in-coverage, out of coverage or partial coverage scenario, in which resources for a communication over the sidelink are (pre-)configured by the wireless communication system or allocated or scheduled autonomously by the transceiver (204),
performing a transmission over the sidelink to another transceiver (202) of the wireless communication system,
wherein the transmission to the other transceiver (202) is aligned with an on-duration of a discontinuous reception of the other transceiver (202),
wherein the reception mode configuration signal is a wake-up signal,
**characterised in that** a wake-up sequence of the wake-up signal
- is mapped in the time and/or frequency domain to symbols reserved for an automatic gain control or a hybrid automatic repeat request, HARQ, feedback,
- or is mapped in the time and/or frequency domain to control or data symbols,
- or is aligned in the time and/or frequency domain aligned with a synchronization signal.

15. Computer program comprising instructions which, when the program is executed by a computer, cause the computer to carry out a method according to one of the claims 13 to 14.

## Patentansprüche

1. Sende/Empfangsgerät (202) eines drahtlosen Kommunikationssystems,
wobei das Sende/Empfangsgerät (202) dazu konfiguriert ist, in einem Sidelink-In-Coverage-, Out-of-Coverage- oder Partial-Coverage-Szenario zu arbeiten, in dem Ressourcen für eine Kommunikation über den Sidelink durch das drahtlose Kommunikationssystem (vor-) konfiguriert oder durch das Sende/Empfangsgerät (202) autonom zugewiesen oder geplant werden,
wobei das Sende/Empfangsgerät (202) dazu konfiguriert ist, über den Sidelink ein Empfangsmoduskonfigurationssignal von einem anderen Sende/Empfangsgerät (204) des drahtlosen Kommunikationssystems zu empfangen,
wobei das Sende/Empfangsgerät (202) dazu konfiguriert ist, ansprechend auf den Empfang des Empfangsmoduskonfigurationssignals einen Empfangsmodus zu ändern,
wobei das Empfangsmoduskonfigurationssignal ein Aufwecksignal ist,
wobei das Sende/Empfangsgerät (202) dazu konfiguriert ist, ansprechend auf das Aufwecksignal in den normalen Empfangsmodus zu schalten,
**dadurch gekennzeichnet, dass** eine Aufwecksequenz des Aufwecksignals
- in dem Zeit- und/oder Frequenzbereich auf Symbole abgebildet wird, die für eine automatische Verstärkungssteuerung oder eine hybride automatische Wiederholungsanforderungs-, HARQ-, Rückmeldung reserviert sind,
- oder in dem Zeit- und/oder Frequenzbereich auf Steuer- oder Datensymbole abgebildet wird,
- oder in dem Zeit- und/oder Frequenzbereich ausgerichtet ist, der mit einem Synchronisationssignal ausgerichtet ist.

2. Sende/Empfangsgerät (202) gemäß Anspruch 1,
wobei das Sende/Empfangsgerät (202) dazu konfiguriert ist, den Empfangsmodus zu ändern, indem dasselbe in Abhängigkeit von dem Empfangsmoduskonfigurationssignal in einen der folgenden Empfangsmodi schaltet:
- einen diskontinuierlichen Empfangsmodus,
- einen normalen Empfangsmodus,
- einen Empfangsmodus mit geringer Leistung,
- einen Schlafmodus.

3. Sende/Empfangsgerät (202) gemäß einem der Ansprüche 1 bis 2,
wobei das Sende/Empfangsgerät (202) dazu konfiguriert ist, das Aufwecksignal unter Verwendung nur eines Teils seiner Empfängerkette zu erfassen,
oder wobei das Sende/Empfangsgerät (202) dazu konfiguriert ist, das Aufwecksignal unter Verwendung eines separaten Aufwecksignaldetektors zu erfassen,
oder wobei das Sende/Empfangsgerät (202) dazu konfiguriert ist, das Aufwecksignal kontinuierlich zu erfassen,
oder wobei das Sende/Empfangsgerät (202) dazu konfiguriert ist, das Aufwecksignal in vorkonfigurierten Schlitzen oder Perioden zu erfassen.

4. Sende/Empfangsgerät (202) gemäß einem der Ansprüche 1 bis 3,
wobei das Aufwecksignal eine bekannte Sequenz aufweist, und/oder
wobei das Aufwecksignal ein Unicast-, Groupcast- oder Broadcast-Aufwecksignal ist, und/oder
wobei das Aufwecksignal nur das Sende/Empfangsgerät (202) oder eine Gruppe von Sende/Empfangsgeräten adressiert, wobei das Sende/Empfangsgerät (202) Teil der Gruppe von Sende/Empfangsgeräten ist.

5. Sende/Empfangsgerät (202) gemäß einem der Ansprüche 1 bis 4,
wobei das Sende/Empfangsgerät (202) dazu konfiguriert ist, von dem anderen Sende/Empfangsgerät (204) oder einem anwendungsspezifischen Aufwecksignalkonfigurations-Sende/Empfangsgerät eine Aufwecksignalkonfigurationsnachricht zu empfangen, wobei das Sende/Empfangsgerät (202) dazu konfiguriert ist, zumindest einen Parameter einer Aufwecksignalempfangskonfiguration, die zum Empfangen des Aufwecksignals verwendet wird, basierend auf der Aufwecksignalkonfigurationsnachricht einzustellen,
oder wobei das Sende/Empfangsgerät (202) dazu konfiguriert ist, zumindest einen Parameter einer Aufwecksignalempfangskonfiguration, die zum Empfangen des Aufwecksignals verwendet wird, basierend auf einem Bereich, in dem sich das Sende/Empfangsgerät (202) befindet, einzustellen,
oder wobei das Sende/Empfangsgerät (202) dazu konfiguriert ist, von einer Basisstation des drahtlosen Kommunikationssystems eine Aufwecksignalkonfigurationsnachricht zu empfangen, wobei das Sende/Empfangsgerät (202) dazu konfiguriert ist, zumindest einen Parameter einer Aufwecksignalempfangskonfiguration, die zum Empfangen des Aufwecksignals verwendet wird, basierend auf der Aufwecksignalkonfigurationsnachricht einzustellen.

6. Sende/Empfangsgerät (202) gemäß einem der Ansprüche 1 bis 5,
wobei das Sende/Empfangsgerät (202) dazu konfiguriert ist, eine Aufwecksignalkonfigurationsnachricht an das andere Sende/Empfangsgerät (204) zu übertragen, wobei die Aufwecksignalkonfigurationsnachricht eine Aufwecksignalkonfiguration des Sende/Empfangsgeräts (202) beschreibt.

7. Sende/Empfangsgerät (204) eines drahtlosen Kommunikationssystems,
wobei das Sende/Empfangsgerät (204) dazu konfiguriert ist, in einem Sidelink-In-Coverage-, Out-of-Coverage- oder Partial-Coverage-Szenario zu arbeiten, in dem Ressourcen für eine Kommunikation über den Sidelink durch das drahtlose Kommunikationssystem (vor-) konfiguriert oder durch das Sende/Empfangsgerät (204) autonom zugewiesen oder geplant werden,
wobei das Sende/Empfangsgerät (204) dazu konfiguriert ist, über den Sidelink ein Empfangsmoduskonfigurationssignal an ein anderes Sende/Empfangsgerät (202) des drahtlosen Kommunikationssystems zu übertragen,
wobei das Empfangsmoduskonfigurationssignal dazu konfiguriert ist, das andere Sende/Empfangsgerät (202) zu steuern, um ansprechend auf den Empfang des Empfangsmoduskonfigurationssignals einen Empfangsmodus zu ändern,
wobei das Empfangsmoduskonfigurationssignal ein Aufwecksignal ist,
wobei das Sende/Empfangsgerät (204) dazu konfiguriert ist,
- eine Aufwecksequenz des Aufwecksignals in dem Zeit- und/oder Frequenzbereich auf Symbole abzubilden, die für eine automatische Verstärkungssteuerung oder eine hybride automatische Wiederholungsanforderungs-, HARQ-, Rückmeldung reserviert sind,
- oder eine Aufwecksequenz des Aufwecksignals in dem Zeit- und/oder Frequenzbereich auf Steuer- oder Datensymbole abzubilden,
- oder eine Aufwecksequenz des Aufwecksignals in dem Zeit- und/oder Frequenzbereich mit einem Synchronisationssignal auszurichten.

8. Sende/Empfangsgerät (204) gemäß Anspruch 7,
wobei das Sidelink-Empfangsmoduskonfigurationssignal dazu konfiguriert ist, das andere Sende/Empfangsgerät (202) zu steuern, um einen Empfangsmodus in einen der folgenden Empfangsmodi zu ändern
- einen diskontinuierlichen Empfangsmodus,
- einen normalen Empfangsmodus,
- einen Empfangsmodus mit geringer Leistung,
- einen Schlafmodus.

9. Sende/Empfangsgerät (204) gemäß einem der Ansprüche 7 bis 8,
wobei das Aufwecksignal eine bekannte Sequenz aufweist, und/oder
wobei das Aufwecksignal ein Unicast-, Groupcast- oder Broadcast-Aufwecksignal ist, und/oder
wobei das Aufwecksignal nur das andere Sende/Empfangsgerät (202) oder eine Gruppe von Sende/Empfangsgeräten adressiert, wobei das andere Sende/Empfangsgerät (202) Teil der Gruppe von Sende/Empfangsgeräten ist.

10. Sende/Empfangsgerät (204) gemäß einem der Ansprüche 7 bis 9,
wobei das Sende/Empfangsgerät (204) dazu konfiguriert ist, das Aufwecksignal in vorkonfigurierten Schlitzen oder Perioden zu übertragen.

11. Sende/Empfangsgerät (204) gemäß einem der Ansprüche 7 bis 10,
wobei das Sende/Empfangsgerät (204) dazu konfiguriert ist, an das andere Sende/Empfangsgerät (204) eine Aufwecksignalkonfigurationsnachricht zu übertragen,
oder wobei das Sende/Empfangsgerät (204) dazu konfiguriert ist, zumindest einen Parameter einer Aufwecksignalübertragungskonfiguration, die zum Übertragen des Aufwecksignals verwendet wird, basierend auf einem Bereich einzustellen, in dem sich das Sende/Empfangsgerät (204) befindet,
oder wobei das Sende/Empfangsgerät (204) dazu konfiguriert ist, an eine Basisstation des drahtlosen Kommunikationssystems eine Aufwecksignalkonfigurationsnachricht zu übertragen, die eine Aufwecksignalkonfiguration beschreibt, die von dem anderen Sende/Empfangsgerät (202) zu verwenden ist.

12. Sende/Empfangsgerät (204) gemäß einem der Ansprüche 7 bis 11,
wobei das Sende/Empfangsgerät (204) dazu konfiguriert ist, eine Aufwecksignalkonfigurationsnachricht von dem anderen Sende/Empfangsgerät (202) zu empfangen,
wobei das Sende/Empfangsgerät (204) dazu konfiguriert ist, zumindest einen Parameter einer Aufwecksignalübertragungskonfiguration, die zum Übertragen des Aufwecksignals verwendet wird, basierend auf der Aufwecksignalkonfigurationsnachricht einzustellen.

13. Verfahren zum Betreiben eines Sende/Empfangsgeräts (202) eines drahtlosen Kommunikationssystems, wobei das Verfahren folgende Schritte aufweist:
Betreiben des Sende/Empfangsgeräts (202) in einem Sidelink-In-Coverage-, Out-of-Coverage- oder Partial-Coverage-Szenario, in dem Ressourcen für eine Kommunikation über den Sidelink durch das drahtlose Kommunikationssystem (vor-) konfiguriert oder durch das Sende/Empfangsgerät (202) autonom zugewiesen oder geplant werden,
Empfangen eines Empfangsmoduskonfigurationssignals von einem anderen Sende/Empfangsgerät (204) des drahtlosen Kommunikationssystems über den Sidelink,
Ändern eines Empfangsmodus ansprechend auf den Empfang des Empfangsmoduskonfigurationssignals,
wobei das Empfangsmoduskonfigurationssignal ein Aufwecksignal ist,
wobei das Ändern des Empfangsmodus ansprechend auf das Aufwecksignal ein Schalten in den normalen Empfangsmodus aufweist,
**dadurch gekennzeichnet, dass** eine Aufwecksequenz des Aufwecksignals
- in dem Zeit- und/oder Frequenzbereich auf Symbole abgebildet wird, die für eine automatische Verstärkungssteuerung oder eine hybride automatische Wiederholungsanforderungs-, HARQ-, Rückmeldung reserviert sind,
- oder in dem Zeit- und/oder Frequenzbereich auf Steuer- oder Datensymbole abgebildet wird,
- oder in dem Zeit- und/oder Frequenzbereich ausgerichtet ist, der mit einem Synchronisationssignal ausgerichtet ist.

14. Verfahren zum Betreiben eines Sende/Empfangsgeräts (204) eines drahtlosen Kommunikationssystems, wobei das Verfahren folgende Schritte aufweist:
Betreiben des Sende/Empfangsgeräts (204) in einem Sidelink-In-Coverage-, Out-of-Coverage- oder Partial-Coverage-Szenario, in dem Ressourcen für eine Kommunikation über den Sidelink durch das drahtlose Kommunikationssystem (vor-) konfiguriert oder durch das Sende/Empfangsgerät (204) autonom zugewiesen oder geplant werden,
Durchführen einer Übertragung über den Sidelink zu einem anderen Sende/Empfangsgerät (202) des drahtlosen Kommunikationssystems,
wobei die Übertragung zu dem anderen Sende/Empfangsgerät (202) mit einer Einschaltdauer eines diskontinuierlichen Empfangs des anderen Sende/Empfangsgeräts (202) ausgerichtet ist,
wobei das Empfangsmoduskonfigurationssignal ein Aufwecksignal ist,
**dadurch gekennzeichnet, dass** eine Aufwecksequenz des Aufwecksignals
- in dem Zeit- und/oder Frequenzbereich auf Symbole abgebildet wird, die für eine automatische Verstärkungssteuerung oder eine hybride automatische Wiederholungsanforderungs-, HARQ-, Rückmeldung reserviert sind,
- oder in dem Zeit- und/oder Frequenzbereich auf Steuer- oder Datensymbole abgebildet wird,
- oder in dem Zeit- und/oder Frequenzbereich ausgerichtet ist, der mit einem Synchronisationssignal ausgerichtet ist.

15. Computerprogramm, das Anweisungen aufweist, die, wenn das Programm durch einen Computer ausgeführt wird, Bewirken, dass der Computer ein Verfahren gemäß einem der Ansprüche 13 bis 14 durchführt.

## Revendications

1. Émetteur-récepteur (202) d'un système de communication sans fil,
dans lequel l'émetteur-récepteur (202) est configuré pour fonctionner dans une couverture de liaison latérale, en scénario hors de couverture ou de couverture partielle, dans lequel les ressources pour une communication via la liaison latérale sont (pré-)configurées par le système de communication sans fil ou attribuées ou planifiées de manière autonome par l'émetteur-récepteur (202),
dans lequel l'émetteur-récepteur (202) est configuré pour recevoir via la liaison latérale un signal de configuration en mode de réception d'un autre émetteur-récepteur (204) du système de communication sans fil,
dans lequel l'émetteur-récepteur (202) est configuré pour changer un mode de réception en réponse à la réception du signal de configuration en mode de réception,
dans lequel le signal de configuration en mode de réception est un signal de réveil, dans lequel l'émetteur-récepteur (202) est configuré pour commuter, en réponse au signal de réveil, vers le mode de réception normal,
**caractérisé en ce qu'**une séquence de réveil du signal de réveil
- est mappée dans le domaine temporel et/ou fréquentiel à des symboles réservés pour un contrôle de gain automatique ou une rétroaction de demande de répétition automatique hybride (HARQ),
- ou est mappée dans le domaine temporel et/ou fréquentiel à des symboles de contrôle ou de données,
- ou est alignée dans le domaine temporel et/ou fréquentiel avec un signal de synchronisation.

2. Émetteur-récepteur (202) selon la revendication 1,
dans lequel l'émetteur-récepteur (202) est configuré pour changer le mode de réception par commutation, en dépendance du signal de configuration en mode de réception, vers l'un des modes de réception suivants
- un mode de réception discontinu,
- un mode de réception normal,
- un mode de réception basse puissance,
- un mode veille.

3. Émetteur-récepteur (202) selon l'une des revendications 1 à 2,
dans lequel l'émetteur-récepteur (202) est configuré pour détecter le signal de réveil en utilisant uniquement une partie de sa chaîne de réception,
ou dans lequel l'émetteur-récepteur (202) est configuré pour détecter le signal de réveil en utilisant un détecteur de signal de réveil séparé,
ou dans lequel l'émetteur-récepteur (202) est configuré pour détecter le signal de réveil en continu,
ou dans lequel l'émetteur-récepteur (202) est configuré pour détecter le signal de réveil dans des créneaux ou des périodes pré-configurés.

4. Émetteur-récepteur (202) selon l'une des revendications 1 à 3,
dans lequel le signal de réveil comprend une séquence connue, et/ou
dans lequel le signal de réveil est un signal de réveil en diffusion individuelle, en diffusion de groupe ou en diffusion, et/ou
dans lequel le signal de réveil s'adresse uniquement à l'émetteur-récepteur (202) ou à un groupe d'émetteurs-récepteurs, dans lequel l'émetteur-récepteur (202) fait partie du groupe d'émetteurs-récepteurs.

5. Émetteur-récepteur (202) selon l'une des revendications 1 à 4,
dans lequel l'émetteur-récepteur (202) est configuré pour recevoir de l'autre émetteur-récepteur (204) ou d'un émetteur-récepteur de configuration de signal de réveil dédié un message de configuration de signal de réveil, dans lequel l'émetteur-récepteur (202) est configuré pour ajuster au moins un paramètre d'une configuration de réception de signal de réveil utilisée pour recevoir le signal de réveil en fonction du message de configuration de signal de réveil,
ou dans lequel l'émetteur-récepteur (202) est configuré pour ajuster au moins un paramètre d'une configuration de réception de signal de réveil utilisée pour recevoir le signal de réveil en fonction d'une zone dans laquelle l'émetteur-récepteur (202) est situé,
ou dans lequel l'émetteur-récepteur (202) est configuré pour recevoir d'une station de base des systèmes de communication sans fil un message de configuration de signal de réveil, dans lequel l'émetteur-récepteur (202) est configuré pour ajuster au moins un paramètre d'une configuration de réception de signal de réveil utilisée pour recevoir le signal de réveil en fonction du message de configuration de signal de réveil.

6. Émetteur-récepteur (202) selon l'une des revendications 1 à 5,
dans lequel l'émetteur-récepteur (202) est configuré pour transmettre un message de configuration de signal de réveil à l'autre émetteur-récepteur (204), le message de configuration de signal de réveil décrivant une configuration de signal de réveil de l'émetteur-récepteur (202).

7. Émetteur-récepteur (204) d'un système de communication sans fil,
dans lequel l'émetteur-récepteur (204) est configuré pour fonctionner dans une couverture de liaison latérale, en scénario hors de couverture ou de couverture partielle, dans lequel les ressources pour une communication via la liaison latérale sont (pré-)configurées par le système de communication sans fil ou attribuées ou planifiées de manière autonome par l'émetteur-récepteur (204),
dans lequel l'émetteur-récepteur (204) est configuré pour transmettre via la liaison latérale un signal de configuration en mode de réception à un autre émetteur-récepteur (202) du système de communication sans fil,
dans lequel le signal de configuration en mode de réception est configuré pour contrôler l'autre émetteur-récepteur (202) pour changer un mode de réception en réponse à la réception du signal de configuration en mode de réception,
dans lequel le signal de configuration en mode de réception est un signal de réveil,
dans lequel l'émetteur-récepteur (204) est configuré
- pour mapper une séquence de réveil du signal de réveil dans le domaine temporel et/ou fréquentiel à des symboles réservés pour un contrôle de gain automatique ou une rétroaction de demande de répétition automatique hybride (HARQ),
- ou pour mapper une séquence de réveil du signal de réveil dans le domaine temporel et/ou fréquentiel à des symboles de contrôle ou de données,
- ou pour aligner une séquence de réveil du signal de réveil dans le domaine temporel et/ou fréquentiel avec un signal de synchronisation.

8. Émetteur-récepteur (204) selon la revendication 7,
dans lequel le signal de configuration en mode de réception de la liaison latérale est configuré pour contrôler l'autre émetteur-récepteur (202) pour changer un mode de réception vers l'un des modes de réception suivants
- un mode de réception discontinu,
- un mode de réception normal,
- un mode de réception basse puissance,
- un mode veille.

9. Émetteur-récepteur (204) selon l'une des revendications 7 à 8,
dans lequel le signal de réveil comprend une séquence connue, et/ou
dans lequel le signal de réveil est un signal de réveil en diffusion individuelle, en diffusion de groupe ou en diffusion, et/ou
dans lequel le signal de réveil s'adresse uniquement à l'autre émetteur-récepteur (202) ou à un groupe d'émetteurs-récepteurs, dans lequel l'autre émetteur-récepteur (202) fait partie du groupe d'émetteurs-récepteurs.

10. Émetteur-récepteur (204) selon l'une des revendications 7 à 9,
dans lequel l'émetteur-récepteur (204) est configuré pour transmettre le signal de réveil dans des créneaux ou des périodes pré-configurés.

11. Émetteur-récepteur (204) selon l'une des revendications 7 à 10,
dans lequel l'émetteur-récepteur (204) est configuré pour transmettre à l'autre émetteur-récepteur (204) un message de configuration de signal de réveil,
ou dans lequel l'émetteur-récepteur (204) est configuré pour ajuster au moins un paramètre d'une configuration de transmission de signal de réveil utilisée pour transmettre le signal de réveil en fonction d'une zone dans laquelle l'émetteur-récepteur (204) est situé,
ou dans lequel l'émetteur-récepteur (204) est configuré pour transmettre à une station de base du système de communication sans fil un message de configuration de signal de réveil décrivant une configuration de signal de réveil à utiliser par l'autre émetteur-récepteur (202).

12. Émetteur-récepteur (204) selon l'une des revendications 7 à 11,
dans lequel l'émetteur-récepteur (204) est configuré pour recevoir un message de configuration de signal de réveil de l'autre émetteur-récepteur (202),
dans lequel l'émetteur-récepteur (204) est configuré pour ajuster au moins un paramètre d'une configuration de transmission de signal de réveil utilisée pour transmettre le signal de réveil en fonction du message de configuration de signal de réveil.

13. Procédé de fonctionnement d'un émetteur-récepteur (202) d'un système de communication sans fil, le procédé comprenant :
le fonctionnement de l'émetteur-récepteur (202) dans une couverture de liaison latérale, en scénario hors de couverture ou de couverture partielle, dans lequel les ressources pour une communication via la liaison latérale sont (pré-)configurées par le système de communication sans fil ou attribuées ou planifiées de manière autonome par l'émetteur-récepteur (202),
la réception via la liaison latérale d'un signal de configuration de mode de réception d'un autre émetteur-récepteur (204) du système de communication sans fil,
le changement d'un mode de réception en réponse à la réception du signal de configuration de mode de réception,
dans lequel le signal de configuration en mode de réception est un signal de réveil,
dans lequel le changement du mode de réception comprend la commutation, en réponse au signal de réveil, vers le mode de réception normal,
**caractérisé en ce qu'**une séquence de réveil du signal de réveil
- est mappée dans le domaine temporel et/ou fréquentiel à des symboles réservés pour un contrôle de gain automatique ou une rétroaction de demande de répétition automatique hybride (HARQ),
- ou est mappée dans le domaine temporel et/ou fréquentiel à des symboles de contrôle ou de données,
- ou est alignée dans le domaine temporel et/ou fréquentiel avec un signal de synchronisation.

14. Procédé de fonctionnement d'un émetteur-récepteur (204) d'un système de communication sans fil, le procédé comprenant :
le fonctionnement de l'émetteur-récepteur (204) dans une couverture de liaison latérale, en scénario hors de couverture ou de couverture partielle, dans lequel les ressources pour une communication via la liaison latérale sont (pré-)configurées par le système de communication sans fil ou attribuées ou planifiées de manière autonome par l'émetteur-récepteur (204),
la réalisation d'une transmission via la liaison latérale à un autre émetteur-récepteur (202) du système de communication sans fil,
dans lequel la transmission à l'autre émetteur-récepteur (202) est alignée avec durée active d'une réception discontinue de l'autre émetteur-récepteur (202),
dans lequel le signal de configuration en mode de réception est un signal de réveil,
**caractérisé en ce qu'**une séquence de réveil du signal de réveil
- est mappée dans le domaine temporel et/ou fréquentiel à des symboles réservés pour un contrôle de gain automatique ou une rétroaction de demande de répétition automatique hybride (HARQ),
- ou est mappée dans le domaine temporel et/ou fréquentiel à des symboles de contrôle ou de données,
- ou est alignée dans le domaine temporel et/ou fréquentiel avec un signal de synchronisation.

15. Programme informatique comprenant des instructions qui, lorsque le programme est exécuté par un ordinateur, amènent l'ordinateur à mettre en œuvre un procédé selon l'une des revendications 13 à 14.
